# EUROPÄISCHE PATENTSCHRIFT

(11) **EP 3 559 446 B1**
(45) Veröffentlichungstag und Bekanntmachung des Hinweises auf die Patenterteilung: **18.05.2022**
(21) Anmeldenummer: 17821594.3
(22) Anmeldetag: 19.12.2017
(51) Int. Cl.: F03D 7/02, F03D 7/04

(54) **VERFAHREN ZUM STEUERN EINER WINDENERGIEANLAGE**
METHOD FOR CONTROLLING A WIND TURBINE
PROCÉDÉ PERMETTANT DE COMMANDER UNE ÉOLIENNE

(30) Priorität: 20.12.2016 DE 102016125045
(43) Veröffentlichungstag der Anmeldung: 30.10.2019
(73) Patentinhaber: Wobben Properties GmbH, 26607 Aurich (DE)
(72) Erfinder: MELI TIWA, William, 22457 Hamburg (DE); DIEDRICHS, Volker, 18209 Bad Doberan (DE); GERTJEGERDES, Stefan, 26603 Aurich (DE)
(74) Vertreter: Eisenführ Speiser
(86) Internationale Anmeldenummer: PCT/EP2017/083501
(87) Internationale Veröffentlichungsnummer: WO 2018/114923

(56) Entgegenhaltungen:
- WO-A1-2015/192852
- DE-A1-102010 027 229
- US-A1- 2014 178 197

## Beschreibung

Die vorliegende Anmeldung betrifft ein Verfahren zum Steuern einer Windenergieanlage. Außerdem betrifft die vorliegende Erfindung eine entsprechende Windenergieanlage. Windenergieanlagen sind bekannt und sie erzeugen elektrische Energie aus Wind. Dafür weist eine solche Windenergieanlage üblicherweise einen aerodynamischen Rotor mit wenigstens einem, meist drei Rotorblättern auf. Die Rotorblätter sind an einer Nabe befestigt, die Teil des Rotors ist, und der Rotor ist in einem Maschinenhaus oder einer Gondel gelagert. Das Maschinenhaus bzw. die Gondel ist auf einem Turm, selten auch auf einem Mast drehbar gelagert und kann in den Wind ausgerichtet werden. Im Betrieb der Windenergieanlage entsteht auch eine Belastung durch den Wind. Diese Belastung wirkt unter anderem auf die Rotorblätter, die Nabe, eine Lagerung des Rotors in der Gondel, auf die Lagerung der Gondel auf dem Turm und letztlich auch auf den Turm selbst.

Zur Reduzierung solcher Lasten besonders bei Windgeschwindigkeiten oberhalb einer Nennwindgeschwindigkeit, aber auch in Bereichen darunter, werden die Rotorblätter so verstellt, dass nur Nennleistung mit der Windenergieanlage erzeugt wird. Das ist jedenfalls eine Vorgehensweise bei Windenergieanlagen, die über in ihrem Blattwinkel verstellbare Rotorblätter verfügen.

Bei noch höheren Windgeschwindigkeiten wird zudem eine Entlastung dadurch erreicht, dass nicht nur die Leistung auf Nennleistung gehalten wird, sondern auch unter Nennleistung abgesenkt wird und häufig wird auch die Drehzahl reduziert. Dadurch soll insgesamt die Belastung der Windenergieanlage reduziert werden.

Grundsätzlich ist es natürlich unerwünscht, bei starkem Wind die Leistung der Windenergieanlage zu reduzieren, weil damit auch eine Ertragseinbuße verbunden ist. Besonders bei hohen Windgeschwindigkeiten, die auch nahe einem Sturm sind, kommt häufig hinzu, dass nicht nur der Wind stark ist, sondern auch häufig viele starke Böen aufweist. Der Wind ist dann also besonders starken Schwankungen unterlegen.

Um auch bei schwankenden Windgeschwindigkeiten eine Überlastung der Windenergieanlage zu verhindern, wird diese bei schwankenden Windgeschwindigkeiten häufig auf die jeweils größte Windgeschwindigkeit geregelt bzw. eingestellt. Das kann zu dem Problem führen, dass die Ertragseinbuße größer als notwendig ausfällt.

Häufig kommt hinzu, dass eine moderne Windenergieanlage eine sehr große Rotorfläche überstreicht, die einen Durchmesser von 100 Metern oder mehr haben kann. Entsprechend treten auch große Höhenunterschiede und damit ggf. verbunden entsprechende Unterschiede der Windgeschwindigkeit in der Rotorfläche zur selben Zeit auf. Es können auch lokale Windfeldunterschiede, einschließlich Turbulenzen, innerhalb der Rotorfläche auftreten.

Um solche örtlichen Variationen innerhalb der Rotorfläche zu berücksichtigen, ist bereits eine Einzelblattverstellung vorgeschlagen worden, bei der die Rotorblätter individuell ihre Blattwinkel verstellen. Damit kann erreicht werden, dass sich die Rotorblätter an unterschiedliche Gegebenheiten aufgrund ihrer unterschiedlichen Positionen während ihrer Drehung einstellen können. Ein solches Verfahren ist bspw. den Dokumenten DE 10 2010 027229 A1 und US 6,361,275 zu entnehmen.

Aber auch solche Verfahren vermögen es nicht, unterschiedliche Belastungen in der Rotorfläche vorherzusagen. Als Abhilfe kann hierfür eine verbesserte und dezidierte Erfassung des Windfeldes bspw. durch Lidar oder Sodar geschaffen werden. Solche Maßnahmen bzw. die dazu notwendigen Geräte sind allerdings häufig sehr kostspielig. Das Deutsche Patent- und Markenamt hat in der Prioritätsanmeldung zu vorliegender Anmeldung folgenden Stand der Technik recherchiert: DE 10 2008 031 816 A1, US 2014/0178197 A1, EP 2 607 689 A2, WO 2009/033484 A2 und WO 2015/192852 A1. Der vorliegenden Erfindung liegt somit die Aufgabe zu Grunde, zumindest eines der oben genannten Probleme zu adressieren. Insbesondere soll eine Lösung vorgeschlagen werden, bei der eine Windenergieanlage verbessert auf Belastungen durch den Wind reagieren kann, insbesondere unter Berücksichtigung lokaler und zeitlicher Variationen. Zumindest soll zu bisher bekannten Lösungen eine Alternative vorgeschlagen werden. Erfindungsgemäß wird ein Verfahren nach Anspruch 1 vorgeschlagen. Ein solches Verfahren zum Steuern einer Windenergieanlage geht von einer Windenergieanlage aus, die einen aerodynamischen Rotor mit in ihrem Blattwinkel individuell verstellbaren Rotorblättern aufweist. Es ist also bspw. für jedes Rotorblatt wenigstens ein Verstellantrieb zum Verstellen des Blattwinkels vorgesehen, der zudem grundsätzlich individuell ansteuerbar ist, sodass für jedes Rotorblatt jeweils ein individueller Blattwinkel einstellbar ist. Das Verstellen des Rotorblattes in seinem Blattwinkel wird üblicherweise auch als Pitchen bezeichnet. Entsprechend ist der jeweils wenigstens eine Antrieb ein Pitchantrieb.

Außerdem ist der Rotor mit einer variablen Rotordrehzahl betreibbar. Das bedeutet besonders, dass die Rotordrehzahl auch bedarfsabhängig ausgewählt und eingestellt werden kann.

Zum Erzeugen einer Generatorleistung ist außerdem ein Generator vorgesehen, der mit dem aerodynamischen Rotor gekoppelt ist. Hierbei kommt besonders eine direkte Kopplung in Betracht, sodass eine Rotation des aerodynamischen Rotors einer Rotation eines Läufers des Generators entspricht. Bei einem solchen getriebelosen System ist der Läufer des Generators fest mit dem aerodynamischen Rotor verbunden. Grundsätzlich kommt aber auch die Verwendung eines Getriebes zwischen aerodynamischem Rotors und Läufer des Generators in Betracht. Der Begriff Läufer wird hier zur sprachlichen Abgrenzung gegen den aerodynamischen Rotor verwendet, unabhängig von dem verwendeten Generatortyp.

Das Verfahren zum Steuern einer Windenergieanlage schlägt nun als einen Schritt ein individuelles Verstellen jedes Blattwinkels entsprechend eines individuellen Sollblattwinkels vor. Es wird also für jedes Rotorblatt und damit für jeden Blattwinkel ein Blattsollwinkel vorgegeben und diese Blattsollwinkel können unterschiedlich sein.

Jeder dieser Blattsollwinkel setzt sich zusammen aus einem für alle Rotorblätter vorgegebenen gemeinsamen Grundwinkel und einem individuellen Aufschaltwinkel zum Berücksichtigen individueller Lastmomente, oder dazu repräsentativer Größen, wie bspw. ein Biegemoment am Blattanschluss. Der gemeinsame Grundwinkel ist somit für alle Rotorblätter gleich und wird für diese auch gemeinsam vorgegeben. Diese Vorgabe kann bereits an jedem Pitchantrieb erfolgen, oder zunächst auch noch zentral weiterverarbeitet werden. Zu dem gemeinsamen Grundwinkel kommt ein individueller Aufschaltwinkel hinzu, der zum Berücksichtigen individueller Lastmomente vorgesehen ist. Die Bestimmung, insbesondere Berechnung, jedes individuellen Aufschaltwinkels erfolgt somit so, dass jeweils ein individueller Sollwinkel erzeugt wird, durch den individuelle Lastmomente Berücksichtigung finden können. Insoweit wird eine belastungsabhängige Vorgabe vorgeschlagen. Das schließt allerdings nicht aus, dass auch andere Kriterien mitberücksichtigt werden können. Vorzugsweise wird auch der individuelle Aufschaltwinkel so bestimmt, dass nicht nur eine Lastreduzierung vorgenommen wird, sondern dass auch möglichst eine zu starke Ertragseinbuße vermieden wird.

Es wird nun weiter vorgeschlagen, dass jeweils wenigstens ein Lastmoment an jedem der Rotorblätter erfasst wird. Besonders können Lastmessungen an jedem Rotorblatt vorgesehen sein. Dazu können Sensoren an dem Blatt oder der Blattwurzel vorgesehen sein oder es kann bspw. auch eine Bewegung bzw. Auslenkung des Rotorblattes ausgewertet werden. Es kommt auch die Berücksichtigung mehrerer Eingangsgrößen zur Erfassung jedes dieser Lastmomente in Betracht.

Dazu wird außerdem vorgeschlagen, dass zu jedem betrachteten Rotorblatt ein vorlaufendes Rotorblatt vorhanden ist und der Blattsollwinkel jedes betrachteten Rotorblattes in Abhängigkeit des wenigstens einen Lastmomentes seines vorlaufenden Rotorblattes bestimmt wird. Besonders ist ein Rotor mit drei Rotorblättern vorgesehen, wobei auch eine andere Anzahl in Betracht kommt, und in diesem Beispiel des Rotors mit drei Rotorblättern sind die Rotorblätter jeweils um 120° in Umfangsrichtung zueinander versetzt angeordnet. Bei der Drehung des Rotors läuft somit ein zweites Rotorblatt einem ersten Rotorblatt immer um 120° nach, wobei jedes der Rotorblätter das erste und jedes der Rotorblätter das zweite Rotorblatt sein kann und im Übrigen auch jedes der Rotorblätter ein drittes Rotorblatt sein kann.

Es wird nun vorgeschlagen, dass, um bei diesem Beispiel zu bleiben, der Blattsollwinkel, nämlich insbesondere der Aufschaltwinkel, dieses exemplarischen zweiten Rotorblattes in Abhängigkeit eines Lastmomentes des exemplarisch genannten ersten Rotorblattes bestimmt wird. Dem liegt der Gedanke zu Grunde, dass das zweite Rotorblatt durch die Drehung des Rotors in Kürze etwa die lokale Windsituation des ersten Rotorblattes mit hoher Wahrscheinlichkeit vorfinden wird, nämlich dann, wenn dieses zweite Rotorblatt die Position des ersten Rotorblatts erreicht. Besonders ist auch zu erwarten, dass dieses zweite Rotorblatt im Wesentlichen die Belastung erfährt, die dieses erste Rotorblatt kurz zuvor erfahren hat. Dabei ist zu beachten, dass die Belastung, die das jeweilige Rotorblatt erfährt, auch von dem jeweiligen Blattzustand des jeweiligen Rotorblattes abhängt. Haben das genannte erste und zweite Rotorblatt denselben Zustand, was hier nur zur vereinfachenden Erläuterung angenommen wird, erfahren sie bei gleicher Windsituation annähernd die gleiche Belastung. Solche Blattzustände könnten einen Blattwinkel, oder Strukturauslenkungszustände umfassen, also bspw. eine Durchbiegung des Blattes.

Die unmittelbar erfasste Belastung eines Rotorblattes geht somit unmittelbar in die Bestimmung des Blattsollwinkels des dazu nachlaufenden Rotorblatts ein.

Es ist zu betonen, dass hierbei insoweit nicht nur eine Betrachtung der Belastung des vorlaufenden Rotorblattes vorgeschlagen wird, sondern dass diese auch unmittelbar und aktuell für den Blattwinkel des nachlaufenden Rotorblattes Berücksichtigung findet. Die Blattsollwinkel, besonders die individuellen Aufschaltwinkel, werden also unmittelbar belastungsabhängig bestimmt und verändert, wobei aber nicht ihre eigene erfasste Belastung, sondern die Belastung des ihnen vorlaufenden Rotorblattes verwendet wird.

Vorzugsweise wird zum Bestimmen jedes Aufschaltwinkels eine Winkeltrajektorie bestimmt, wobei der Aufschaltwinkel jeweils ein Element der Winkeltrajektorie ist, sodass die Winkeltrajektorie jeweils einen kontinuierlichen, besonders einen stetig, insbesondere stetig differenzierbaren Verlauf des jeweiligen Aufschaltwinkels angibt. Die Winkeltrajektorie gibt also den Verlauf des jeweiligen Aufschaltwinkels an, setzt sich also aus den Aufschaltwinkeln zusammen. Der Aufschaltwinkel ist jeweils ein Element der Winkeltrajektorie, nämlich jeweils zu jedem betrachteten Zeitpunkt bzw. zu jeder betrachteten Rotorposition. Entsprechend ändert sich der Blattsollwinkel jedes Rotorblattes entsprechend dieser Winkeltrajektorie. Mit anderen Worten setzt sich der Blattsollwinkel jeweils aus dem gemeinsamen Grundwinkel und dem jeweils relevanten Wert der Winkeltrajektorie zusammen. Alternativ kann die Winkeltrajektorie bereits den gemeinsamen kollektiven Blattwinkel mit umfassen. Der Sollwinkel kann also bereits in der Winkeltrajektorie zusammengesetzt werden, oder später aus dem jeweiligen Wert der Winkeltrajektorie und dem Grundwinkel zusammengesetzt werden.

Die Bestimmung der Aufschaltwinkel und damit der Sollwinkel erfolgt im laufenden Betrieb in Abhängigkeit der Belastung des vorlaufenden Rotorblattes, ohne sich aber auf jeweils eine individuelle Berechnung eines einzelnen Winkels in Abhängigkeit der Blattbelastung zu beschränken und dies ständig zu wiederholen. Vielmehr wird ein Gesamtverlauf des Sollwinkels zumindest für einen gewissen Bereich vorgeschlagen. Besonders werden hierdurch auch vorherige Blattsollwinkel, die bspw. bezogen auf die Drehbewegung des Rotors wenige Grad vorher einzustellen waren, berücksichtigt. Besonders wird auch vorgeschlagen, nicht ausdrücklich den vorherigen eingestellten Blattwinkel zu verwenden, sondern den vorherigen vorgesehenen Blattwinkel, um es anschaulich zu formulieren.

Durch diese Vorgabe einer solchen Winkeltrajektorie kann somit ein Verlauf des Sollwinkels und damit auch im Wesentlichen ein Verlauf des dann tatsächlich eingestellten Winkels vorgegeben werden. Dadurch können bspw. auch unnötig große oder schnelle Verstellkommandos an den Pitchantrieb vermieden werden. Die Winkeltrajektorie ist dafür kontinuierlich, weist also keine Lücken auf. Vorzugsweise ist sie stetig, weist also keine Sprünge auf und ist insbesondere auch stetig differenzierbar, weißt also auch keine Knickstellen auf.

Dadurch ist es möglich, eine für jedes Rotorblatt vorausschauende Verstellung zur Senkung einer Blattbelastung vorzusehen, die zudem, obwohl sie individuell ist und ständig durchgeführt werden kann, eine übermäßige Belastung der Pitchantriebe vermeiden kann.

Gemäß einer Ausführungsform wird vorgeschlagen, dass die Winkeltrajektorie in wenigstens zwei Schritten bestimmt wird. Dabei wird in einem ersten Schritt eine optimale Winkeltrajektorie bestimmt, die in Bezug auf wenigstens ein erstes Auslegungskriterium optimiert ist. Es kommt auch in Betracht, die optimale Winkeltrajektorie in Bezug auf mehrere erste Auslegungskriterien zu optimieren. Es entsteht dadurch eine optimale Winkeltrajektorie, die in Bezug auf dieses eine oder die mehreren ersten Auslegungskriterien optimiert ist, möglicherweise aber nicht in jeder Hinsicht praktikabel ist.

Entsprechend wird vorgeschlagen, in einem zweiten Schritt diese optimale Winkeltrajektorie, die in dem genannten ersten Schritt bestimmt wurde, unter weiterer Berücksichtigung eines zweiten Auslegungskriteriums zu einer angepassten Winkeltrajektorie zu ändern. Dies kann auch unter weiterer Berücksichtigung mehrerer zweiter Auslegungskriterien erfolgen. Mit anderen Worten wird die optimale Winkeltrajektorie des ersten Schrittes in dem zweiten Schritt in eine machbare Winkeltrajektorie geändert.

Vorzugsweise wird die Winkeltrajektorie, insbesondere die optimale Winkeltrajektorie über die Lösung eines Optimierungsproblems bestimmt. Dieses Optimierungsproblem basiert wenigstens auf dem wenigstens einen ersten Auslegungskriterium oder mehreren ersten Auslegungskriterien. Die Winkeltrajektorie kann somit die Lösung eines Optimierungsproblems, besonders eines Optimierungsproblems mit Nebenbedingungen sein. Dazu kann beispielsweise ein Verfahren nach Lagrange angewendet werden, besonders das Verfahren der Langrange-Multiplikatoren. Es kommt auch in Betracht, Karush-Kuhn-Tucker-Bedingungen (KKT) als Verallgemeinerung der Lagrange-Multiplikatoren zu verwenden.

Vorzugsweise werden als erste Auslegungskriterien eine Lastreduktion, eine Ertragsneutralität und eine Antriebsschonung des Pitchantriebs zugrundegelegt. Es erfolgt also eine Bestimmung der optimalen Winkeltrajektorie über die Lösung eines Optimierungsproblems, dem die genannten drei Auslegungskriterien zugrundeliegen. Das kann vorzugsweise bedeuten, dass die optimale Winkeltrajektorie hinsichtlich der Lastreduktion optimiert wird und die Ertragsneutralität und die Antriebsschonung für dieses Optimierungsproblem Nebenbedingungen darstellen. Die optimale Winkeltrajektorie wird also in diesem ersten Schritt so bestimmt, dass eine mechanische Last reduziert wird, während eine Ertragsneutralität und eine Antriebsschonung des Pitchantriebs gewährleistet ist. Eine Lastreduktion kann eine Reduktion der Belastung der Rotorblätter besonders im Bereich der Nabe oder des Wurzelbereichs der Rotorblätter sein. Es kommt aber auch eine Berücksichtigung der auf andere Elemente der Windenergieanlage wirkenden Lasten in Betracht, wie beispielsweise eine auf die Nabe und das Rotorlager wirkende Last oder eine auf ein Azimutlager der Windenergieanlage wirkende Last. Auch eine Last auf einen Turm der Windenergieanlage kommt in Betracht.

Wird als Nebenbedingung die Ertragsneutralität berücksichtigt, oder wird sie anderweitig berücksichtigt, so bedeutet das, dass die Winkeltrajektorie so bestimmt wird, dass sich der Ertrag der Windenergieanlage insgesamt nicht verringert oder zumindest möglichst nicht verringert. Das bedeutet besonders, dass sich der Ertrag im Mittel nicht verringert. Er kann sich also kurzzeitig verringern, wenn diese Verringerung wieder ausgeglichen wird. Es kommt auch in Betracht, dass sich, besonders zyklisch, ein durch jedes einzelne Rotorblatt bedingter Ertrag verändert, die Summe aller drei Rotorblätter, wenn die Windenergieanlage drei Rotorblätter hat, sich aber insgesamt nicht verringert. Die Ertragsneutralität kann auch im Wesentlichen Nicht-Veränderung des Ertrags gegenüber dem Referenzfall, in dem keine Einzelblattverstellung durchgeführt wird, bedeuten. Ein schwächeres Gewichten der Ertragsneutralität kann sowohl eine eventuelle leichte Verringerung als auch eine Verbesserung des Ertrags bedeuten. Das Verfahren kann nämlich zur Glättung des Drehzahlverlaufs und letztendlich zur Ertragsoptimierung eingestellt werden.

Die Antriebsschonung kann bedeuten, dass der Pitchantrieb möglichst wenig, mit möglichst wenig Drehzahl und/oder mit möglichst geringer Verstellgeschwindigkeit betrieben wird. Eine Antriebsschonung kann als Nebenbedingung zur Berücksichtigung des Antriebsverhaltens eingesetzt werden. Dabei können sowohl deren Dynamik als auch Grenzen explizit in die Lösung des Optimierungsproblems einbezogen werden. Diese Maßnahme ermöglicht eine Adaption des Verfahrens zum Beispiel wenn die Blattantriebe in die Sättigung laufen, was zu einer geänderten Dynamik und/oder geänderten Grenze führen kann.

Eine Berücksichtigung der Antriebsschonung als Nebenbedingung, oder anderweitig, kann sich in einem zeitabhängigen Winkelverlauf wiederspiegeln. Bei der bekannten Rotordrehzahl, die hierbei auch veränderlich sein kann, lässt sich der zeitabhängige Verlauf des Blattwinkels unmittelbar in eine Winkeltrajektorie übertragen bzw. umgekehrt. Insoweit wird hier darauf hingewiesen, dass eine Winkeltrajektorie der Verlauf des betreffenden Blattwinkels in Bezug auf die Rotationsposition des Rotors ist, an dem das betreffende Blatt befestigt ist.

Zusammenfassend kann also in dem beschriebenen ersten Schritt die optimale Winkeltrajektorie so bestimmt werden, dass sie zu einer Lastreduktion führt, wobei im Mittel der Ertrag der Windenergieanlage nicht verringert wird und gleichzeitig die optimale Winkeltrajektorie auch durch den betreffenden Pitchantrieb umgesetzt werden kann. Diese optimale Winkeltrajektorie dieses ersten Schrittes ist dann optimal in Bezug auf die Lastreduktion unter Berücksichtigung der Ertragsneutralität und der Antriebsschonung als Nebenbedingungen.

Grundsätzlich kommt auch in Betracht, dass nicht alle genannten Auslegungskriterien oder andere Auslegungskriterien berücksichtigt werden. Beispielsweise kann zusätzlich oder alternativ, beispielsweise alternativ zur Ertragsneutralität berücksichtigt werden, dass die Vorzeichen berücksichtigende Aufsummierung der individuellen Aufschaltwinkel aller Rotorblätter der Windenergieanlage, also beispielsweise aller drei Rotorblätter der Windenergieanlage, immer den Wert Null ergeben, um nur ein Beispiel zu nennen.

Außerdem oder alternativ wird vorgeschlagen, dass die Antriebsdynamik des Pitchantriebs und außerdem oder alternativ Grenzwerte des Pitchantriebs jeweils ein zweites Auslegungskriterium bilden. Diese zweiten Auslegungskriterien in der Antriebsdynamik des Pitchantriebs und/oder der Grenzwerte des Pitchantriebs können dann in dem zweiten Schritt berücksichtigt werden, in dem die im ersten Schritt bestimmte optimale Winkeltrajektorie zu einer angepassten Winkeltrajektorie geändert wird.

Die Berücksichtigung der Antriebsdynamik des Pitchantriebs beinhaltet beispielsweise, dass berücksichtigt wird, dass der betreffende Pitchantrieb nicht jede Winkelveränderung beliebig schnell umsetzen kann. Das kann beispielsweise bedeuten, dass die optimale Winkeltrajektorie dadurch zumindest etwas in ihrer Dynamik verändert wird. Beispielsweise können abrupte Veränderungen, die in der optimalen Winkeltrajektorie vorgesehen waren, abgeschwächt werden, so dass sie mit dem Pitchantrieb dann auch realistischerweise umgesetzt werden können.

Als Grenzwerte des Pitchantriebs können besonders maximale Drehzahlen aber auch maximale Beschleunigungen des Pitchantriebs bzw. des resultierenden Blattwinkels berücksichtigt werden. Auch hier kann beispielsweise berücksichtigt werden, wenn die optimale Winkeltrajektorie eine Beschleunigung des Pitchantriebs vorsah, die dieser Pitchantrieb gar nicht erreichen kann. In diesem zweiten Schritt wird die optimale Winkeltrajektorie also in diesem Sinne angepasst. Dabei sind auch dies nur zwei Beispiele. Es kommen auch andere weitere Auslegungskriterien in Betracht, wie beispielsweise eine Torsionsschwingungseigenschaft des zu verstellenden Rotorblatts.

Gemäß einer weiteren Ausführungsform wird vorgeschlagen, dass jeder Blattsollwinkel in Abhängigkeit wenigstens einer weiteren Größe bestimmt wird. Eine solche weitere Größe kann der aktuelle Blattwinkel des betrachteten Rotorblattes sein. Demnach fließt also auch in die Berechnung des Blattsollwinkels der Blattistwinkel ein. Bspw. kann hierdurch vermieden werden, dass eine zu große Abweichung zwischen Blattsollwinkel und Blattistwinkel vorgegeben wird. Dadurch kann besonders auch die Belastung der Pirchantriebe geschont werden.

Es kann auch ein Betriebszustand der verwendeten Pitchsysteme als weitere Größe betrachtet werden. Auch dadurch kann eine Schonung der Pitchantriebe erreicht werden. Hierbei ist ein Pitchantrieb ein Teil eines Pitchsystems bzw. der Pitchantrieb kann ggf. auch das Pitchsystem bilden. Bspw. kann berücksichtig werden, mit welcher Geschwindigkeit ein Pitchantrieb gerade eine Verstellung vornimmt, oder ob er überhaupt gerade eine Verstellung vornimmt. Auch eine Temperatur des Pitchantriebs bzw. Pitchsystems kann hierunter fallen. Auch mechanische Zustände des Blattantriebs können betrachtet werden. Dazu kann beispielsweise gehören, Schmierzustände der Blattlagerung, des Getriebes des Blattantriebs oder anderer geschmierter Elemente zu berücksichtigen.

Es wird auch vorgeschlagen, dass eine Sektorgröße eines für das erfasste Lastmoment betrachteten Sektors als weitere Größe berücksichtigt wird. Hierzu wird vorgeschlagen, dass Sektoren vorgesehen sind, bspw. 30°, 60° oder 90° Sektoren der Rotorblattfläche, die die Rotorblätter überstreichen, in denen jeweils eine Winkeltrajektorie berechnet wird. Damit können bestimmte grundsätzliche Gegebenheiten oder Zusammenhänge berücksichtigt werden. Bspw. kann ein kleiner Sektor im sog. 6-Uhr-Bereich vorgesehen sein, nämlich im Bereich, in dem die Rotorblätter den Turm und damit einen möglichen Turmschatten passieren. Für diesen Bereich kann eine andere Berechnungsvorschrift zur Berechnung des Blattsollwinkels bzw. des Aufschaltwinkels bzw. der Winkeltrajektorie vorgesehen sein, als in einem anderen Bereich. Es kann auch bspw. in einem oberen Bereich ein größerer Sektor vorgesehen sein, bspw. von einer 10-Uhr-Stellung bis zu einer 2-Uhr-Stellung, weil hier zwar mit einer vergleichsweise hohen Windgeschwindigkeit gerechnet werden kann, diese sich aber von der 10-Uhr-Stellung bis zur 2-Uhr-Stellung kaum verändert, weil sich der Höhenbereich des Rotorblattes dort wenig verändert, wohingegen ein Rotorblatt bei der Drehung des aerodynamischen Rotors seine Höhenposition von einer 8-Uhr-Stellung zu einer 10-Uhr-Stellung schneller erhöht bzw. von einer 2-Uhr-Stellung zu einer 4-Uhr-Stellung schneller verringert.

Auch das Lastmoment einer Rotornabe kann als weitere Größe berücksichtigt werden. Hier kann also zusätzlich zu der Belastung des vorlaufenden Rotorblattes eine Belastung der Rotornabe berücksichtigt werden. Dies kann sowohl direkt durch eine Messung an der Nabe, als auch indirekt bspw. durch Schätzung der Nabenbelastung auf Basis einer Blattbelastung erfolgen. Entsprechend kann zusätzlich zu einer Blattbelastung auch eine Nabenbelastung bzw. eine anderweitig auf die Windenergieanlage und nicht nur auf das einzelne Rotorblatt wirkende Belastung berücksichtigt werden. Es kommt auch die Erfassung und Verwendung eines Rotornabenbiegemomentes in Betracht, das eine Biegung der Nabe oder eines Elementes der oder bei der Nabe erfasst, wie bspw. eine Biegung eines Achszapfens, der die Nabe trägt.

Auch eine Rotordrehzahl kann als weitere Größe berücksichtigt werden. Bspw. kann eine Sektorgröße in Abhängigkeit der Rotordrehzahl bestimmt werden. Hierbei kann es vorteilhaft sein, bei höheren Rotordrehzahlen größere Sektorgrößen anzusetzen.

Auch eine Rotorposition kann als weitere Größe berücksichtigt werden. So können bspw. positionsabhängige Belastungen oder andere Einflüsse wie bspw. ein Turmschatten in einer 6-Uhr-Stellung einfließen.

Auch eine Rotorbeschleunigung kann als weitere Größe Berücksichtigung finden. Darunter fällt natürlich auch eine Verlangsamung des Rotors, die eine negative Rotorbeschleunigung ist. Eine positive Rotorbeschleunigung kann je nach Rotordrehzahl, die wie genannt auch als weitere Größe berücksichtigt werden kann, auf eine drohende Überdrehzahl hinweisen und entsprechend sollte auch dies bei der Bestimmung des Blattsollwinkels so berücksichtigt werden, dass dieser ein Erreichen einer Überdrehzahl nicht unnötig stark begünstigt. Umgekehrt kann auch eine Abbremsung des Rotors in der Nähe einer unteren Rotordrehzahl, in der die Windenergieanlage noch gerade betrieben werden kann, berücksichtigt werden und entsprechend der Blattsollwinkel so gewählt werden, dass der Rotor nicht noch stärker abgebremst wird, um nur ein weiteres Beispiel zu nennen.

Erfindungsgemäß wird vorgeschlagen, dass das wenigstens eine erfasste Lastmoment und ggf. die weiteren berücksichtigten Größen über einstellbare Gewichtungsfaktoren oder Gewichtungsfunktionen einfließen. Dadurch kann der Einfluss der betreffenden Größe, also zumindest des erfassten Lastmomentes, beeinflusst und durch das Einstellen der Gewichtungsfaktoren oder Gewichtungsfunktionen auch ggf. angepasst bzw. verändert werden. Die Verwendung eines Gewichtungsfaktors kann dabei als ein Sonderfall der Gewichtungsfunktion angesehen werden. Durch eine Gewichtungsfunktion kann bspw. eine Dynamik oder Nichtlinearität mitberücksichtigt werden. Eine Gewichtungsfunktion kann bspw. ein PT1-Glied sein, über das eine Änderung der jeweils gewichtet zu berücksichtigenden Größe entsprechend verzögert einfließt. Die Gewichtungsfunktion kann bspw. auch eine Wurzelfunktion sein, über die der Betrag der gewichtet zu berücksichtigenden Größe dann nichtlinear einfließt. Besonders können mehrere Größen einfließen und durch die Gewichtungsfaktoren bzw. die Gewichtungsfunktionen kann darauf Einfluss genommen werden, wie groß der jeweilige Einfluss der jeweiligen Größe ist. Vorzugsweise erfolgt dies so, dass jeder der weiteren Größen jeweils einen der einstellbaren Gewichtungsfaktoren bzw. Gewichtungsfunktionen zugeordnet ist. Jede weitere Größe, die berücksichtigt wird, kann somit über den ihr zugeordneten Gewichtungsfaktor bzw. Gewichtungsfunktion in der Stärke in der sie einfließt eingestellt werden.

Erfindungsgemäß wird vorgeschlagen, dass die Gewichtungsfaktoren bzw. Gewichtungsfunktionen in Abhängigkeit der erzielbaren Lastreduktion, Ertragsneutralität und Antriebsschonung gewählt werden. Besonders in Simulationen oder Testmessungen in Feldversuchen kann geprüft werden, welche Größen wie und in welchem Maße das Regelungsergebnis beeinflussen. Abhängig davon werden die Gewichtungsfaktoren bzw. die Gewichtungsfunktionen ausgewählt, um so die jeweiligen Einflüsse des Lastmomentes des vorlaufenden Blattes und die weiteren berücksichtigten Größen aufeinander abzustimmen. Als Bewertungskriterien werden die erzielbare Lastreduktion, die erzielbare Ertragsneutralität und die Antriebsschonung berücksichtigt. Vorzugsweise werden diese Größen über eine Bewertungsnorm verglichen, z.B. über eine H2-Norm. Es wird also nicht nur versucht, die Last bzw. Belastung möglichst stark zu reduzieren, sondern es wird auch versucht, den Ertrag dabei nicht oder möglichst wenig zu reduzieren oder gar zu verbessern. Optimalerweise wird der Ertrag nicht reduziert, so dass durch die die Belastung reduzierende Maßnahme eine Ertragsneutralität erzielt wäre.

Zusätzlich wird vorgeschlagen, eine möglichst hohe Antriebsschonung zu erreichen. Daher wird auch mitberücksichtigt, wie stark die Antriebe, die auch Pitchantriebe genannt werden, belastet werden. Vorzugsweise wird der Aufschaltwinkel so gewählt, dass der Mittelwert der Aufschaltwinkel aller Rotorblätter Null ist. Vorzugsweise wird das nicht für jeden Tastzeitpunkt gefordert, sondern im Mittel über einen längeren Zeitraum. Dadurch kann erreicht werden, dass der Mittelwert der Sollwinkel dem Grundwinkel entspricht. Es wird besonders auch vermieden, dass bspw. alle Winkel der Rotorblätter in eine Richtung von dem Grundwinkel abweichen, was im Ergebnis zu einer anderen aerodynamischen Gesamtsituation des Rotors führt, als durch Vorgabe des Grundwinkels vorgesehen war. Es wird somit der Gefahr entgegengewirkt, dass die individuelle belastungsabhängige Blattwinkelverstellung die Vorgabe des aerodynamischen und regelungstechnischen Verhaltens der Windenergieanlage insgesamt verändert, zumindest wird verhindert, dass dies zu stark verändert wird.

Außerdem oder alternativ wird der Aufschaltwinkel so gewählt, dass der Betrag jeders Aufschaltwinkels einen vorbestimmten Maximalwinkel nicht überschreitet. Auch hierdurch kann erreicht werden, dass für den Gesamtbetrieb der Windenergieanlage noch im Wesentlichen der Grundwinkel bestimmend ist. Ein solcher vorbestimmter Maximalwinkel kann vorzugsweise einen Wert von etwa 3°, 5° oder 7° annehmen. Durch diese Werte kann eine Verstellung noch zugelassen werden, die eine signifikante Blattentlastung ermöglicht, ohne aber die aerodynamische Gesamtsituation des Rotors zu sehr zu verändern.

Gemäß einer Ausführungsform wird vorgeschlagen, dass an jedem Rotorblatt wenigstens zwei Belastungsmessungen mit unterschiedlichen Belastungsrichtungen erfasst werden und dass die Blattsollwinkel so bestimmt werden, dass eine auf die Windenergieanlage wirkende Belastung so minimiert wird, dass ein Nickmoment und ein Giermoment minimiert werden, zumindest jeweils in der Amplitude verringert werden. Durch die Berücksichtigung wenigstens zweier Belastungsrichtungen an jedem Rotorblatt wird somit nicht nur ein Betrag der Belastung erfasst, sondern auch eine Richtung der Belastung. Eine solche Richtung der Belastung kann zu einem Nickmomentverlauf führen, bei dem also die Gondel, die den Rotor trägt, ein Drehmoment um eine waagerechte Achse erfährt, die senkrecht zu einer Drehachse des Rotors steht. Es kann auch ein Giermoment erzeugt werden, das ein Drehmoment bezeichnet, das auf die Gondel um eine senkrechte Achse wirkt. Durch eine entsprechende richtungssensitive Berücksichtigung dieser Blattbelastungen kann ein solches Nickmoment und/oder ein solches Giermoment auch durch die vorgeschlagene individuelle Blattverstellung minimiert oder zumindest reduziert werden. Besonders können Amplituden-Schwankungen der Nabenmomente, vor allem in Nick und Gierrichtung berücksichtigt und dementsprechend verringert werden. Das gelingt besonders dadurch, dass jedes Rotorblatt individuell so verstellt wird, dass jedes Rotorblatt zu einer Amplituden-Verringerung des Nickmomentes und/oder Giermomentes beiträgt und diese Beiträge aller Rotorblätter somit zusammenwirken können.

Eine weitere Ausgestaltung schlägt vor, dass eine von den Rotorblättern überstrichene Rotorfläche zur Erfassung der Lastmomente in mehrere Sektoren unterteilt wird und die Lastmomente jeweils beim Überstreichen eines Sektors durch ein Rotorblatt aufgenommen werden und daraus eine Teiltrajektorie für Blattsollwerte eines nachlaufenden Rotorblattes bestimmt wird. Vorzugsweise wird die Teiltrajektorie aus mehreren Stützstellen zusammengesetzt und dazu wird als eine bevorzugte Lösung vorgeschlagen, dass zwischen den Stützstellen Werte der Teiltrajektorie interpoliert werden.

Es wird somit eine abschnittsweise Erfassung der Lastmomente und Bestimmung einer Trajektorie für Blattsollwerte vorgeschlagen. Somit kann abschnittsweise vorgegangen werden, besonders können unterschiedliche Sektoren der Rotorfläche berücksichtigt werden und hierbei kann auch die Art und Weise der Berücksichtigung von einem zum nächsten Sektor variieren. Dem liegt auch die Erkenntnis zu Grunde, dass sich der Wind und seine Eigenschaften innerhalb der Rotorfläche verändern können, beispielsweise abhängig der Höhe und/oder abhängig zur Nähe des Turmes der Windenergieanlage. Gleichzeitig wurde erkannt, dass eine vollständig individuelle Berücksichtigung jeder Rotorblattposition zu aufwendig sein kann, zumindest unverhältnismäßig sein kann. Entsprechend wird vorgeschlagen, eine Berücksichtigung solcher unterschiedlichen Charakteristika des Windes in der Rotorfläche durch sektorweise Betrachtung zu berücksichtigen.

Dazu werden vorschlagsgemäß in jedem Sektor Lastmomente aufgenommen und in eine Teiltrajektorie oder einen Trajektorienabschnitt umgerechnet. Nämlich für eine Trajektorie für Blattsollwerte für das jeweils nachlaufende Rotorblatt. Damit kann somit eine zumindest sektorweise individuelle Berücksichtigung vorgenommen werden, wobei gleichwohl ein Gesamtkonzept für die individuelle Blattverstellung erzeugt wird, dem nämlich die Trajektorie bzw. die Teiltrajektorie zu Grunde liegt. Vorzugsweise kann vorgesehen sein, Teiltrajektorien benachbarter Sektoren in ihrem Übergangsbereich so aneinander anzupassen, dass auch dieser Übergangsbereich stetig und insbesondere auch stetig differenzierbar ist. Damit wird dann eine Gesamttrajektorie erstellt.

Dass eine Gesamttrajektorie erstellt wird, bedeutet aber nicht, dass diese für eine gesamte Umdrehung bereits vollständig vorbestimmt ist. Vielmehr wird immer nur ein aktueller Abschnitt bestimmt. Schließlich erfolgt die Bestimmung einer Trajektorie für ein Rotorblatt in Abhängigkeit der Belastung des vorlaufenden Rotorblattes, sodass sinnvollerweise maximal eine Trajektorie für 120° vollständig vorbestimmt wird. Dennoch werden aber benachbarte Trajektorien sinnvollerweise stetig und insbesondere stetig differenzierbar aneinander angesetzt. Beispielsweise kann eine Teiltrajektorie für einen 60° Sektor, also beispielsweise für eine 8-Uhr bis 10-Uhr Position bestimmt werden. Im Anschluss daran wird eine neue Teiltrajektorie für einen nächsten 60° Sektor, nämlich die Position von 10 bis 12 Uhr bestimmt und an die vorherige Teiltrajektorie angesetzt. Für das nachfolgende Rotorblatt, für die diese Teiltrajektorien bestimmt wurden, kann dann diese Trajektorie nach und nach umgesetzt werden, es können dann also nach und nach die Blattwinkel entsprechend der Trajektorie für Blattsollwerte eingestellt werden.

Auch innerhalb jedes Sektors kann eine Umsetzung der Lastmomente über Stützstellen erfolgen. So können beispielsweise alle 5°, um ein Beispiel zu nennen, Blattsollwerte der zu erstellenden Teiltrajektorie bestimmt und zu der Teiltrajektorie zusammengesetzt werden. Falls zwischen diesen Stützstellen weitere Werte benötigt werden, können diese interpoliert werden, oder eine solche Interpolation oder andere Umsetzung findet bei der Umsetzung statt, bei der entsprechende Blattwinkel basierend auf den Blattsollwerten der Teiltrajektorie eingestellt werden.

Vorzugsweise erfolgt die Aufteilung der Rotorfläche in Sektoren in Abhängigkeit eines erfassten oder zu erwartenden Windfeldes im Bereich der Rotorfläche. Wenn also in unterschiedlichen Bereichen der Rotorfläche unterschiedliche Charakteristika des Windes festgestellt wurden, beispielsweise dass der Wind unterschiedlich turbulent ist, so kann das hier berücksichtigt werden.

Vorzugsweise wird eine Größe und/oder Anzahl der Sektoren abhängig des Windfeldes ausgewählt. Zusätzlich oder alternativ kann die Anzahl der Stützstellen der Teiltrajektorien von dem Windfeld abhängen. Besonders für turbulentere Bereiche kann ein Sektor vorgesehen sein, in dem dann außerdem eine vergleichsweise hohe Anzahl der Stützstellen vorgesehen sein kann. Andererseits kann für einen Bereich, in dem der Wind gleichmäßiger ist, entsprechend ein weiterer Sektor vorgesehen sein und in diesen Sektor kann ergänzend vorgesehen sein, dass die Stützstellen vergleichsweise weit auseinander liegen, es kann also vorgesehen sein, dass vergleichsweise wenige Stützstellen in diesem Sektor vorgesehen werden.

Besonders eine erfasste oder zu erwartende Böigkeit kann ein zu berücksichtigendes Kriterium für ein Windfeld sein. Vorzugsweise wird also die Aufteilung der Rotorflächen in Sektoren in Abhängigkeit der Böigkeit der unterschiedlichen Windfelder vorgenommen.

Gemäß einer Ausgestaltung wird vorgeschlagen, dass die Aufteilung der Rotorfläche in Sektoren, insbesondere Größe und/oder Anzahl der Sektoren, adaptiv im laufenden Betrieb der Windenergieanlage vorgenommen wird. Dazu kann ein Adaptionsalgorithmus vorgesehen sein, der die genannten Eingangsgrößen, oder wenigstens eine davon, von denen die Aufteilung in Sektoren abhängt, als Eingangsgrößen erhält und besonders Sektorgröße und/oder Sektoranzahl, vorzugsweise auch die konkreten Bereiche der Sektoren ausgibt. Bspw. können Kriterien, über die die jeweils zu berücksichtigenden Größen zu berücksichtigen sind, also wie bspw. vorstehend beschrieben wurde, in dem Adaptionsalgorithmus implementiert werden. Zusätzlich kann für die adaptive Veränderung der jeweiligen Sektoren eine asymptotisch gedämpfte Verzögerungsfunktion, wie bspw. ein PT1-Glied vorgesehen sein. Vorzugsweise wird jeweils ein Sektor verändert, unmittelbar nachdem er gerade bei einer Einzelblattverstellung berücksichtigt wurde.

Gemäß einer Ausführungsform wird vorgeschlagen, dass mehrere virtuelle Rotorflächen definiert werden. Eine solche virtuelle Rotorfläche entspricht der tatsächlichen Rotorfläche und ist zusätzlich durch wenigstens einen Zeitwert und/oder eine zugehörige Rotorumdrehung gekennzeichnet. Es wird somit besonders die aktuelle, also gerade mit einer Umdrehung überstrichende Rotorfläche zu Grunde gelegt und zusätzlich die Rotorfläche der vorherigen Umdrehung zu Grunde gelegt. Unterstellt, dass dazwischen keine oder keine signifikante Verstellung der Azimutposition vorgenommen wurde, sind die beiden Rotorflächen dieselben, weisen aber unterschiedliche Eigenschaften auf, besonders unterschiedliche Belastungseigenschaften besonders auch in unterschiedlichen Sektoren. Hierdurch kann somit eine Erfassung über mehrere Umdrehungen erfolgen und somit auch die Rotorfläche der vorherigen Umdrehung oder vorherigen Umdrehungen betrachtet werden. Dadurch kann besonders auch beurteilt werden, wie gut die berechnete Einzelblattwinkeltrajektorie vorher war und davon abhängig können Parameter eingestellt oder angepasst werden. Zu solchen Parametern gehören eine zu wählende Sektorgröße und eine einzustellende Pitchdynamik der Pitchsysteme. Gegebenenfalls können auch Antriebsgrenzen angepasst werden, sollten sich solche Antriebsgrenzen bei diesen Untersuchungen als nicht zweckmäßig herausstellen.

Entsprechend wird gemäß einer Ausführungsform vorgeschlagen, dass eine Belastungserfassung über mehrere Umdrehungen erfolgt und der Sollwinkel zusätzlich in Abhängigkeit der Belastung wenigstens einer vorherigen Umdrehung bestimmt wird.

Gemäß einer weiteren Ausgestaltung wird vorgeschlagen, dass jedes betrachtete Rotorblatt seinem Blattsollwinkel mit einer vorgebbaren Einstelldynamik nachgeführt wird, wobei die Einstelldynamik insbesondere ein PTn-Verhalten ist mit n≥1. Außerdem oder alternativ kann ein anderes asymptotisch gedämpftes Verhalten für die Einstelldynamik vorgesehen sein. Demnach wird zum Einen vorgeschlagen, dass die Blattverstellung zur Umsetzung des Sollwertes, also besonders zur Umsetzung einer entsprechenden Trajektorie, bestimmte Eigenschaften aufweist. Diese Eigenschaften werden vorzugsweise so gewählt, dass das Pitchsystem energiearm betrieben wird, gleichwohl eine hohe Dynamik erreicht werden kann. Besonders vorteilhaft ist ein PT1-Verhalten, das einfach realisierbar ist und ein asymptotisches Verhalten aufweist. Um eine höhere Dynamik zu erreichen und auch eine differenziertere Vorgabe der Dynamik vorsehen zu können, kommen auch Einstelldynamiken mit höherer Ordnung in Betracht. Außerdem ist dadurch, dass eine solche Einstelldynamik vorgebbar ist, diese auch bei der Bestimmung des Blattsollwinkels zu berücksichtigen. Besonders kann die Trajektorie so vorgegeben werden, dass diese vorgebbare Dynamik auch eingehalten werden kann. Es wird somit vorgeschlagen, dass die Trajektorie auch abhängig einer vorgebbaren Einstelldynamik bestimmt wird.

Gemäß einer Ausführungsform wird vorgeschlagen, dass das Verstellen des Blattwinkels jedes betrachteten Rotorblattes, insbesondere auch einschließlich der Vorgabe des Blattsollwinkels für das jeweils betrachtete Rotorblatt, ohne Rückführung einer Belastung des betrachteten Rotorblattes erfolgt. Insoweit wird eine Steuerung ohne Rückführung durchgeführt. Im einfachsten Fall erfolgt somit eine Verstellung des betrachteten Rotorblattes nur in Abhängigkeit der Belastung des vorlaufenden Rotorblattes. Damit kann eine Einzelblattverstellung zur Belastungsreduzierung der einzelnen Rotorblätter vorgeschlagen werden, die für jedes Rotorblatt individuell vorgegeben wird, ohne aber die Belastung desselben Rotorblattes zurückzuführen. Dadurch können besonders auch Schwingverhalten oder gar Instabilitäten durch ungünstige Rückführung vermieden werden. Dadurch kann wiederum eine robuste Steuerung erzielt werden. Veränderungen der vermeintlichen Regelstrecke werden dadurch nämlich nicht unmittelbar zurückgeführt und können dadurch auch nicht einen Regelkreis in unvorhergesehener Weise verändern.

Gemäß einer weiteren Ausführungsform wird vorgeschlagen, dass die Blattwinkelsollwerte so vorgegeben werden, dass sich das Nickmoment und das Giermoment gegenüber einem Sollwinkel ohne Aufschaltwinkel reduzieren, wobei eine Erhöhung einer Belastung der Rotorblätter zugelassen wird. Hier wurde besonders erkannt, dass eine Einzelblattverstellung nicht notwendigerweise als alleiniges Ziel haben sollte, die einzelnen Blätter zu entlasten, sondern dass durch die Verstellung einzelner Rotorblätter sowohl das Nickmoment, als auch das Giermoment beeinflusst werden können. Da Belastungen auf dem Rotorblatt im Grunde über einen sehr großen Hebel auf das Nickmoment als auch das Giermoment wirken können, wurde erkannt, dass auch eine Reduzierung des Nickmomentes als auch des Giermomentes unter Inkaufnahme einer Erhöhung der Belastung der Rotorblätter zu einer gesamten Entlastung der Windenergieanlage führen kann.

Dabei ist das Nickmoment ein Moment, das in vertikaler Richtung ein Kippmoment auf die Rotorachse ausübt, um die sich der Rotor dreht. Das Giermoment ist ein Kippmoment, das in horizontaler Richtung auf die Rotordrehachse wirkt.

Gemäß einer Ausführungsform ist das Verfahren dadurch gekennzeichnet, dass der Rotor in seiner von den Rotorblättern überstrichenen Rotorfläche einen Drehmittelpunkt aufweist, der einen geometrischen Mittelpunkt der Rotorfläche bildet und um den sich der Rotor dreht, der Rotor in seiner Rotorfläche einen Lastmittelpunkt aufweist, der einen Mittelpunkt aller auf den Rotor wirkenden Lasten bildet und das Verfahren so vorgeht, dass auch dann, wenn der Lastmittelpunkt von dem Drehmittelpunkt abweicht die Blattsollwinkel, insbesondere die Aufschaltwinkel, so bestimmt werden, dass der Lastmittelpunkt im Wesentlichen in seiner Schwingungsamplitude möglichst konstant bleibt und nicht unbedingt zu dem Drehmittelpunkt hingeführt wird. Hier wird somit vorgeschlagen, dass Wechsellastenvorgänge, die am Rotor-Lastmittelpunkt auftreten, amplitudenmäßig in Grenzen gehalten werden. Es wurde erkannt, dass das leichter erreicht werden kann, wenn nicht explizit versucht wird, den Lastmittelpunkt in Richtung Rotor-Drehmittelpunkt zu verschieben.

Es wird demnach vorgeschlagen, dass nicht explizit versucht wird, den Lastmittelpunkt zu verschieben, sondern Wechsellasten zu vermeiden. Das kann auch vermeiden, dass die Blätter während einer Umdrehung zu starke zyklische Verstellbewegungen durchführen müssen.

Erfindungsgemäß wird auch eine Windenergieanlage vorgeschlagen und die Windenergieanlage umfasst einen aerodynamischen Rotor mit in ihrem Blattwinkel individuell verstellbaren Rotorblättern und wobei der Rotor mit einer variablen Rotordrehzahl betreibbar ist, einen mit dem aerodynamischen Rotor gekoppelten Generator, zum Erzeugen einer Generatorleistung, eine Blattsteuervorrichtung zum individuellen Verstellen jedes Blattwinkels entsprechend eines individuellen Blattsollwinkels, wobei sich jeder Blattsollwinkel zusammensetzt aus einem für alle Rotorblätter vorgegebenen gemeinsamen Grundwinkel und einem individuellen Aufschaltwinkel zum Berücksichtigen individueller Lastmomente, und die Windenergieanlage umfasst auch eine Lasterfassungseinheit zum Erfassen jeweils wenigstens eines Lastmomentes an jedem der Rotorblätter, wobei zu jedem betrachteten Rotorblatt ein vorlaufendes Rotorblatt vorhanden ist und der Blattsollwinkel jedes betrachteten Rotorblattes in Abhängigkeit des wenigstens einen Lastmomentes seines vorlaufenden Rotorblattes bestimmt wird. Das Lastmoment kann bspw. ein Biegemoment sein.

Die vorgeschlagene Windenergieanlage ist damit insbesondere dazu vorbereitet, ein Verfahren zum Steuern einer Windenergieanlage gemäß wenigstens einer beschriebenen Ausführungsform auszuführen. Die Blattsteuervorrichtung kann eine Zentralsteuereinheit und Pitchantriebe an jedem Rotorblatt aufweisen und auch synonym als Blattsteueranordnung bezeichnet werden. Die Zentralsteuereinheit kann besonders Sollwerte bzw. Solltrajektorien für die Pitchantriebe vorgeben, die die Pitchantriebe dann umsetzen indem sie Rotorblätter entsprechend verstellen.

Die Lasterfassungseinheit umfasst besonders wenigstens einen Blattsensor, insbesondere wenigstens einen Lastsensor an jedem Rotorblatt und erfasst dadurch eine Belastung. Jeder Blattsensor ist vorzugsweise als Dehnungssensor ausgebildet. Zu jedem Rotorblatt ist somit wenigstens ein Blattsensor vorgesehen, der erfasste Belastungen an die Blattsteuervorrichtung, besonders an die Zentralsteuereinheit überträgt. Als Belastung oder zur Auswertung der Belastung werden vorzugsweise Biegemomente erfasst oder aus den Messungen abgeleitet. Besonders können aus Dehnungen unter Kenntnis des Bauteils, an dem die Dehnung aufgenommen wurde, Biegemomente abgeleitet werden.

Vorzugsweise ist vorgesehen, dass die Lasterfassungseinheit wenigstens einen Blattsensor an jedem der Rotorblätter aufweist, insbesondere wenigstens zwei Blattsensoren an jedem Rotorblatt so aufweist, dass an jedem Rotorblatt Belastungen in wenigstens zwei Richtungen erfasst werden können. Die Blattsensoren können als Dehnungsmesstreifen ausgebildet sein und sie können an einer Blattwurzel oder einer anderen Stelle des Rotorblattes vorgesehen sein. Bei Verwendung mehrerer Blattsensoren je Rotorblatt zur Erfassung von Blattbelastungen in mehreren Richtungen wird vorzugsweise vorgeschlagen, diese um etwa 90° um die Rotorblattlängsachse versetzt anzuordnen. Vorzugsweise werden optische Fasern als Blattsensoren verwendet, wie bspw. optische Fasern, die nach dem Prinzip der Faser-Bragg-Gitter arbeiten.

Nachfolgend wird die Erfindung exemplarisch anhand von Ausführungsformen unter Bezugnahme auf die begleitenden Figuren näher erläutert.
- Figur 1: zeigt eine Windenergieanlage in einer perspektivischen Ansicht.
- Figur 2: zeigt ein der Erfindung zugrunde liegendes Strukturbild.
- Figur 3: zeigt ein Strukturbild einer vorgeschlagenen Einzelblattverstellung.
- Figur 4: ist eine schematische Darstellung eines Lastmittelpunktes in einer Rotorfläche.
- Figur 5: zeigt einen Teil einer Regelungsstruktur, der Teil der Regelungsstruktur gemäß Figur 3 sein kann.
- Figur 6: veranschaulicht einen Teilaspekt eines vorgeschlagenen Verfahrens.
- Figur 7: veranschaulicht mögliche auf eine Windenergieanlage wirkende Lasten, die durch eine Blattverstellung beeinflusst werden können.

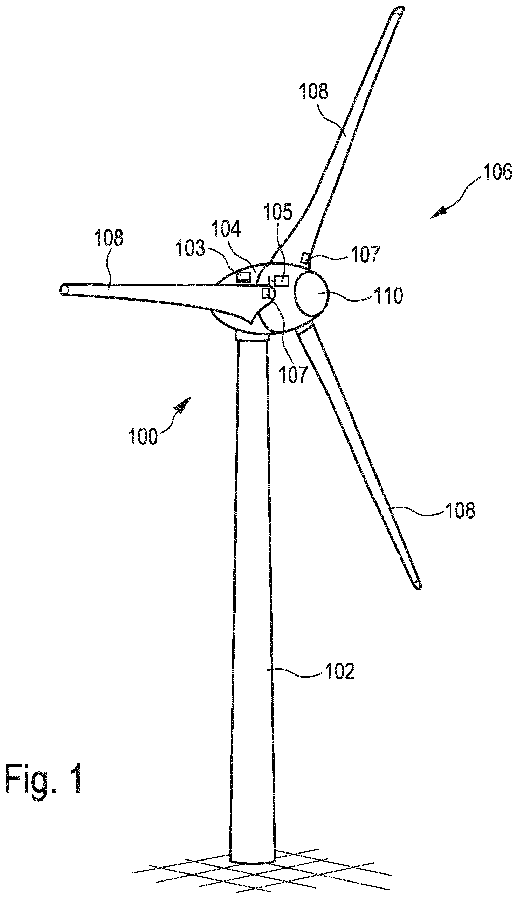

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

In der Gondel 104 kann eine Zentralsteuereinheit 103 vorgesehen sein. Verstellantriebe 105, von denen eines exemplarisch gezeigt ist, sind in dem Spinner 110 jeweils im Bereich jedes Rotorblattes 108 vorgesehen und können zusammen mit der Zentralsteuereinheit 103 eine Blattverstellvorrichtung bilden. An den Rotorblättern 108 sind drei Blattsensoren 107 zur Bestimmung von Belastungen an den Rotorblättern 108 vorgesehen, nämlich an jedem Rotorblatt 108 eines. Die drei Blattsensoren 107 können zusammen eine Lasterfassungseinheit bilden. Die Zentralsteuereinheit 103 kann sich auch an einem Rotorblatt befinden und mit dem Rotor mitdrehen.

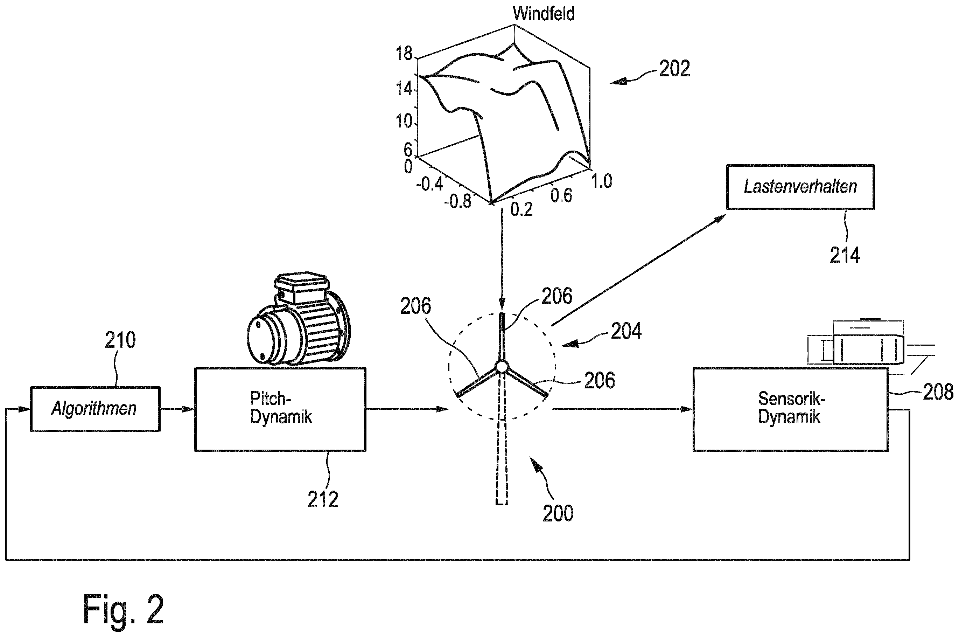

Figur 2 veranschaulicht in der vereinfachten Struktur eine Windenergieanlage 200, auf die ein schematisch angedeutetes Windfeld 202 wirkt. Zunächst wirkt dieses Windfeld 202 besonders auf den Rotor 204 der Windenergieanlage 200.

Besonders auf die Rotorblätter 206 wirkende Kräfte, besonders auch darauf wirkende Lasten können durch entsprechende Sensoren erfasst werden. Eine solche Erfassung unterliegt einer Sensordynamik, die hier durch den Sensordynamikblock 208 veranschaulicht ist.

Das Ergebnis der erfassten Kräfte, Lasten oder anderen Einflüsse, die im Sensordynamikblock 208 erfasst werden, wird an einen Berechnungsblock 210 gegeben, der daraus Vorgabewerte, wie Winkelvorgaben und davon besonders Winkeltrajektorienvorgaben berechnet. Solche Werte können dann als Sollwerte ausgeben kann. Der Berechnungsblock 210 ist dabei nur repräsentativ als ein Block dargestellt und betrifft insbesondere jegliche Algorithmen, die für eine solche Berechnung verwendet werden.

In dem Berechnungsblock 210 berechnete Sollwerte, besonders für einzustellende Blattwinkel, werden an entsprechende Pitchantriebsysteme weitergegeben. Das ist als Weitergabe an den Pitchdynamikblock 212 veranschaulicht, um zu verdeutlichen, dass eine Pitchdynamik zwischen solchen Blattwinkelsollwerten und denen sich dann tatsächlich einstellenden Blattwinkeln existiert.

Der Ausgang dieses Pitchdynamikblocks 212 wirkt dann wieder auf die Windenergieanlage ein, besonders auf den Rotor 204 und seine Rotorblätter 206. Im Ergebnis wirken somit diese von dem Pitchdynamikblock 212 erzeugten Werte für die Blattwinkel als auch der Wind gemäß dem Windfeld 202 auf den Rotor 204 und seine Rotorblätter 206. Aus dieser Gesamtheit ergibt sich dann ein Lastverhalten, das hier der Einfachheit halber als Lastverhaltenblock 214 zur Veranschaulichung eingezeichnet ist. Es resultieren natürlich auch andere Größen, aber für die vorliegende Erfindung sind die resultierenden Lasten bzw. das resultierende Lastverhalten von Bedeutung, so dass dieses hier in dem Lastverhaltenblock 214 veranschaulicht ist.

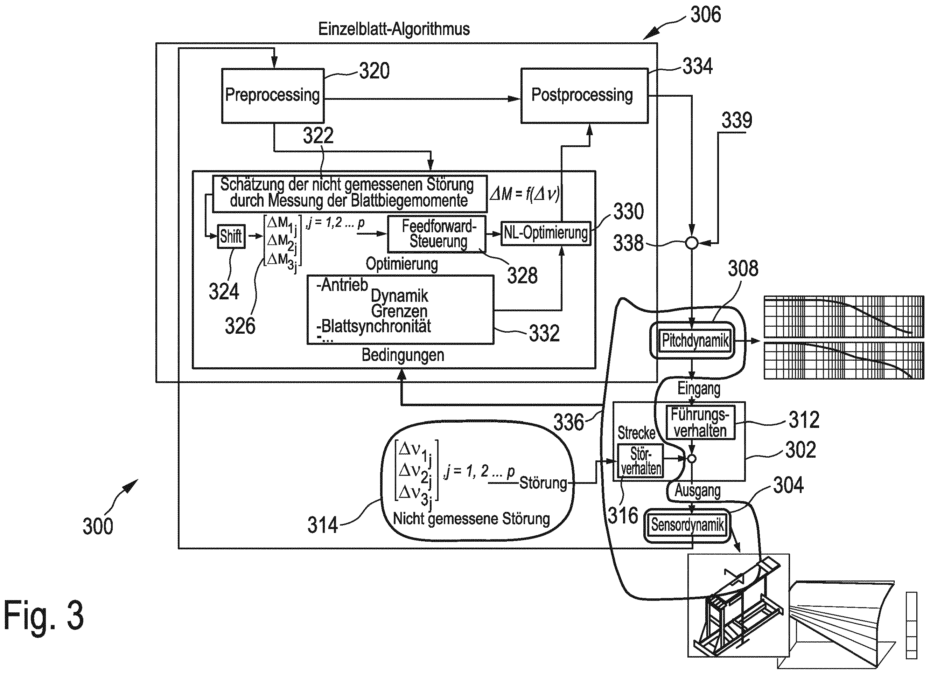

Figur 3 zeigt Details einer Ausführungsform einer vorgeschlagenen Regelung zur Einzelblattverstellung in der Gesamtstruktur 300. Die wesentlichen Elemente dieser Gesamtstruktur 300 sind die Strecke 302, die Sensordynamik 304, der Einzelblattalgorithmusblock 306, die Pitchdynamik 308 und ergänzend die allgemeine Blattverstellung 310.

Die Strecke 302 steht für das für die vorliegende Betrachtung relevante Verhalten der Windenergieanlage. Dazu gehört besonders das Führungsverhalten 312, das angibt, wie die Windenergieanlage auf eine Führungsgröße reagiert. Das betrifft hier besonders das Verhalten oder die Reaktion der Windenergieanlage auf Blattwinkelverstellungen. Die Dynamik der Blattwinkelverstellung, also die Pitchdynamik 308, ist hier getrennt zum Führungsverhalten berücksichtigt. Hier bildet die Ausgangsgröße der Pitchdynamik 308 die Eingangsgröße für das Führungsverhalten 312.

Außerdem wirken noch Störungen 314 auf die Windenergieanlage, nämlich besonders Geschwindigkeitsänderungen bzw. Geschwindigkeitsunterschiede in der Windgeschwindigkeit, die hier als Δv₁, Δv₂ und Δv₃ genannt sind. Diese Störungen 314 werden nicht unmittelbar gemessen. Allerdings ist das Störverhalten 316 bekannt oder zumindest teilweise bekannt und kann ggf. berücksichtigt werden. Die Störungen 314 wirken somit über das Störverhalten 316 auf die Strecke, also auf das Verhalten der Windenergieanlage ein.

Das Ergebnis kann mit Hilfe von Sensoren erfasst werden und wird dabei über die Sensordynamik 304 verändert.

Dieses durch die Sensordynamik 304 veränderte Ausgangsverhalten der Strecke 302, also der Windenergieanlage, wird in den Einzelblattalgorithmusblock 306 geführt bzw. zurückgeführt. Darauf aufbauend kann in dem Einzelblattalgorithmusblock 306 eine Einzelblattverstellung vorgegeben bzw. vorgeplant werden. Dabei ist unter vorgeplant eine sehr kurze Planung zu verstehen, nämlich insbesondere für einen Planungszeitraum der kürzer ist als die Zeit, die der Rotor 204 der Windenergieanlage benötigt, um sich um ein Blatt 206 weiter zu drehen.

Weiterhin berücksichtigt der Einzelblattalgorithmusblock 306 Eigenschaften der Pitchdynamik 308, der Sensordynamik 304 und des Störverhaltens 316, was in der Eigenschaftsgruppe 336 zusammengefasst ist. Der von dieser Eigenschaftsgruppe 336 angedeutete Pfeil zum Einzelblattalgorithmusblock 306 soll nur andeuten, dass eben diese genannten Eigenschaften berücksichtigt werden können. Es bedeutet nicht, dass diese dort ständig zurückgeführt werden. Vielmehr können sie in dem Einzelblattalgorithmusblock 306 hinterlegt sein und ggf. aktualisiert werden.

Zunächst erfolgt in dem Prozessblock 320 eine erste Auswertung der eingegebenen Werte, also der Werte, die von der Sensordynamik 304 erhalten werden. Unter anderem können in dem Prozessblock 320 Biegemomente extrahiert und an den Schätzblock 322 übergeben werden. Der Schätzblock 322 kann aus den gemessenen Biegemomenten nicht gemessene Störungen schätzen. Dazu kommt auch in Betracht, einen Zustandsbeobachter einzusetzen. Dabei kann auch das Störverhalten 316 Berücksichtigung finden. Solche nicht gemessenen Störungen, die veranschaulichend als Störungen 314 in den Block Störverhalten 316 eingehen, können besonders Windvariationen sein, nämlich besonders Veränderungen der Windgeschwindigkeit und der Windrichtung.

Besonders werden in dem Schätzblock 322 die nicht gemessenen Störungen für jedes einzelne Blatt geschätzt, dadurch also erfasst. Diese Ergebnisse für die einzelnen Blätter, wie beispielsweise die Blätter 206 gemäß Figur 2, werden dem Verschiebungsblock 324 zugeführt. Der Verschiebungsblock 324 sorgt dafür, dass die so erfassten Störungen der einzelnen Blätter jeweils für ein nachfolgendes Blatt bereitgestellt bzw. verwendet werden. Dazu werden Verschiebungs- und Zuordnungsoperationen vorgeschlagen, die als eine Verkettung mathematischer Transformationen umgesetzt werden können. Ein Ergebnis ist ein Momentenblock 326, der jeweils ein Differenzmoment enthält, nämlich ein Differenzbiegemoment für jedes Rotorblatt. Ein solches Differenzbiegemoment ist die Differenz zwischen dem geschätzten Biegemoment des jeweiligen Rotorblattes und einem Mittelwert der geschätzten Biegemomente aller drei Rotorblätter.

In dem Momentenblock befinden sich somit verschiedene Momentenvektoren, die nämlich jeweils drei Elemente, also ein Element je Rotorblatt aufweisen. Dabei sind mehrere Vektoren vorgesehen, weil diese Momentenwerte nicht konstant sind und sich über die Rotorfläche, besonders über die Bewegung der Rotorblätter durch Drehung des Rotors verändern. Grundsätzlich kann auch ein kontinuierlicher Momentenvektor mit sich kontinuierlich ändernden Differenzbiegemomenten verwendet werden, was regelungstechnisch besonders unter Verwendung eines Digitalrechners allerdings kaum umsetzbar ist. Es hat sich auch gezeigt, dass eine solche theoretische kontinuierliche Umsetzung nicht erforderlich ist.

Der Ausgang des Momentenblocks 326 wird dann auf den Vorsteuerblock 328 gegeben. Der Vorsteuerblock 328 kann somit im Sinne einer Störgrößenaufschaltung einen Teil eines Blattwinkels bzw. eine Veränderung eines Blattwinkels oder eine Blattwinkeldifferenz für jedes Blatt vorgeben. Dies entspricht im Grunde dem individuellen Aufschaltwinkel, außer dass dieser noch weiter verändert werden kann.

Bereits dieser Vorsteuerblock 328 kann dabei für jedes Rotorblatt für einen Bewegungsabschnitt des Rotorblattes über die Rotorfläche eine Winkeltrajektorie für diesen Teil des Winkels, Differenzwinkels bzw. der Winkelveränderung vorgeben. Beispielsweise kann für ein Rotorblatt eine Winkeltrajektorie für seine Bewegung von einer 12-Uhr- zu einer 2-Uhr-Stellung vorgegeben werden, während für ein weiteres Blatt dies für einen Bereich von der 4-Uhr- bis zur 6-Uhr-Stellung vorgegeben wird. In diesem Beispiel betreffen beide Winkeltrajektorien jeweils einen Bereich von 60°. Es können aber auch andere Bereiche, also andere Sektoren der Rotorfläche zugrundegelegt werden. Dabei können sich diese Sektoren auch jeweils in ihrer Größe von dem einen Blatt zum anderen unterscheiden.

Das Ergebnis der Vorsteuerung gemäß dem Vorsteuerblock 328 wird dann dem nichtlinearen Optimierungsblock 330 zugeführt. In dem nichtlinearen Optimierungsblock 330 können die Winkel, die der Vorsteuerblock 328 erstellt und ergeben hat, noch unter Berücksichtigung von Nebenbedingungen weiter angepasst werden. Solche Nebenbedingungen werden aus dem Nebenbedingungsblock 332 dem nichtlinearen Optimierungsblock 330 zugeführt. Solche Nebenbedingungen können beispielsweise die Dynamik des Pitchantriebs, Grenzen des Pitchantriebs oder eine Blattsynchronität sein. Die Blattsynchronität berücksichtigt als Nebenbedingung, dass die Rotorblätter 206 zwar individuell verstellt werden, gleichwohl insgesamt in ihrer Verstellung aufeinander abgestimmt werden. Besonders soll der Mittelwert der Blattwinkel dem Grundwinkel entsprechen. Dabei reicht es aus, wenn das auf lange Sicht erfüllt ist. Es muss nicht in jedem Abtastzeitpunkt erfüllt werden, sondern es soll nur verhindert werden, dass die Blattwinkel auf Dauer divergieren, was bspw. durch Rundungsfehler passieren könnte.

Die in dem Nebenbedingungsblock 332 berücksichtigten Nebenbedingungen sind somit besonders Antriebsdynamik und Grenzen der Pitchantriebe und die genannte Blattsynchronität. Es können weitere Nebenbedingungen berücksichtigt werden.

Mit dieser Anpassung der Blattwinkel bzw. Blattwinkeltrajektorien in dem nichtlinearen Optimierungsblock 330 können diese dem Nachbearbeitungsblock 334 zugeführt werden. In dem Nachbearbeitungsblock 334 können ggf. noch weitere Anpassungen vorgenommen werden. Besonders kann in dem Nachbearbeitungsblock 334 eine Trajektorie abschließend kontrolliert werden, besonders auf Plausibilität und Umsetzbarkeit. Es kann geprüft werden, ob die jeweilige Trajektorie gültig sein kann, z.B. ob sie innerhalb von vorbestimmten Grenzen liegt und/oder mit einer vorigen Trajektorie zusammengesetzt werden kann, um nur zwei Beispiele zu nennen. Außerdem oder alternativ können in dem Nachbearbeitungsblock konkret aktuell einzustellende Winkelwerte in Abhängigkeit der Drehzahl oder Rotorposition abgeleitet werden. Jede Winkeltrajektorie ist ein Winkelverlauf in Abhängigkeit des Drehwinkels, und damit hängt der jeweils momentan einzustellende Winkel und/oder der momentan zu verwendende Trajektorienabschnitt von der konkreten Position des sich drehenden Rotors ab. Die konkreten Winkelwerte können somit unter Berücksichtigung der aktuellen Rotorposition und damit der aktuellen Rotorblattposition bestimmt werden. Alternativ oder ergänzend kann das unter Berücksichtigung der Rotordrehzahl bestimmt werden. Das kann in dem Nachbearbeitungsblock 334 ausgeführt werden. In diesem Fall kann der Nachbearbeitungsblock 334 statt Winkeltrajektorien konkrete Winkel, also Sollwinkel, ausgeben. Schließlich werden diese Aufschaltwinkel in dem Summierglied 338 einem Grundwinkel 339 zuaddiert. Dieser Grundwinkel 339 kann in üblicherweise vorgegeben werden.

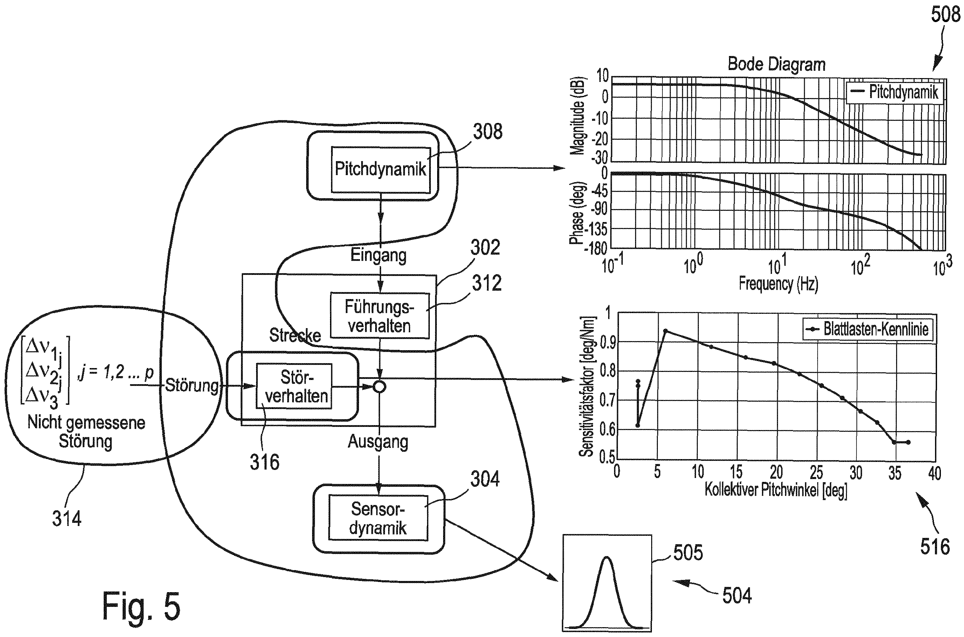

Die Figur 5 zeigt einen Ausschnitt der Figur 3, nämlich der Strecke 302 mit vorgeschalteter Pitchdynamik 308 und nachgeschalteter Sensordynamik 304. Die Strecke 302 beinhaltet das Führungsverhalten 312 und das Störverhalten 316, über das die Störungen 314 auf die Strecke 302 wirken.

In Figur 5 soll besonders veranschaulicht werden, dass die Pitchdynamik 308, die Sensordynamik 304 und das Störverhalten 316 relevante Eigenschaften für die Regelungsstruktur sind. Die jeweiligen Dynamiken sind dabei veranschaulicht.

Zu der Pitchdynamik 308 ist über ein schematisches Bode-Diagramm 508 dargestellt, dass die Pitchdynamik im Wesentlichen ein Tiefpassverhalten zweiter Ordnung aufweist.

Zu dem Störverhalten ist durch ein Stördiagramm 516 veranschaulicht, dass eine winkelabhängige Sensitivität vorliegt. Das Stördiagramm zeigt dabei einen Sensitivitätsfaktor, der normiert an der Ordinate aufgetragen ist über einen kollektiven Pitchwinkel von 0-40°, wobei die Kennlinie von 2-37° reicht. Der Sensitivitätsfaktor gibt dabei an, um wieviel Grad (°) das Blatt aus dem Wind gedreht werden muss, um einem Biegemoment als Belastung entgegenzuwirken. Bei einem Blattwinkel von 6° muss das Blatt also um über 10° weiter aus dem Wind gedreht werden, um eine Biegebelastung von etwa 0,9pu abzubauen. Dieselbe Biegebelastung kann bei einem Blattwinkel von 35° mit einer weiteren Drehbewegung um weniger als 7° aus dem Wind abgebaut werden.

Der kollektive Pitchwinkel ist der mittlere berücksichtigte Pitchwinkel.

Es ist somit zu erkennen, dass die Sensitivität im Wesentlichen mit größer werdenden Blattwinkeln abnimmt. Bei größeren Blattwinkeln ist das Blatt also für Störungen weniger anfällig. Der Maximalwert ergibt sich aber bei 6° in dem gezeigten Beispiel. Entscheidend hierbei ist allerdings, dass ein solches Störverhalten grundsätzlich existiert und besonders für den Einzelblattalgorithmus besonders im Einzelblattalgorithmusblock 306 berücksichtigt werden kann. Die Störungen können bzw. werden nämlich nicht gemessen, gleichwohl ist aber bekannt, wie stark ihr Einfluss in Abhängigkeit des Blattwinkels sein kann. Damit kann also einerseits aufgrund des Blattwinkels und eines erfassten Biegemomentes auf die Störung geschlossen werden, andererseits aufgrund der erfassten Störung bei dem nachfolgenden Blatt besser auf das Biegemoment geschlossen werden, jedenfalls als Schätzung, um es anschaulich auszudrücken.

Aus der Biegebelastung des vorlaufenden Blattes kann also unter Berücksichtigung der Störsensitivität, besonders des Sensitivitätsfaktors, der sich auf die Blattlast bzw. eine Biegebelastung bezieht, die Störung geschätzt werden. Aus dieser geschätzten Störung lässt sich dann unter Berücksichtigung der Störsensitivität, besonders des Sensitivitätsfaktors, die Biegebelastung des nachfolgenden Rotorblattes ableiten, das diesem vorlaufenden Rotorblatt nachläuft.

Zu der Sensordynamik 404 ist ein Sensordiagramm 504 angeführt, das besonders die Komplexität der Sensoren veranschaulichen soll. Besonders ist ein Teildiagramm 505 angedeutet, das besonders die Streuung eines solchen Sensors bzw. solcher Sensoren veranschaulicht.

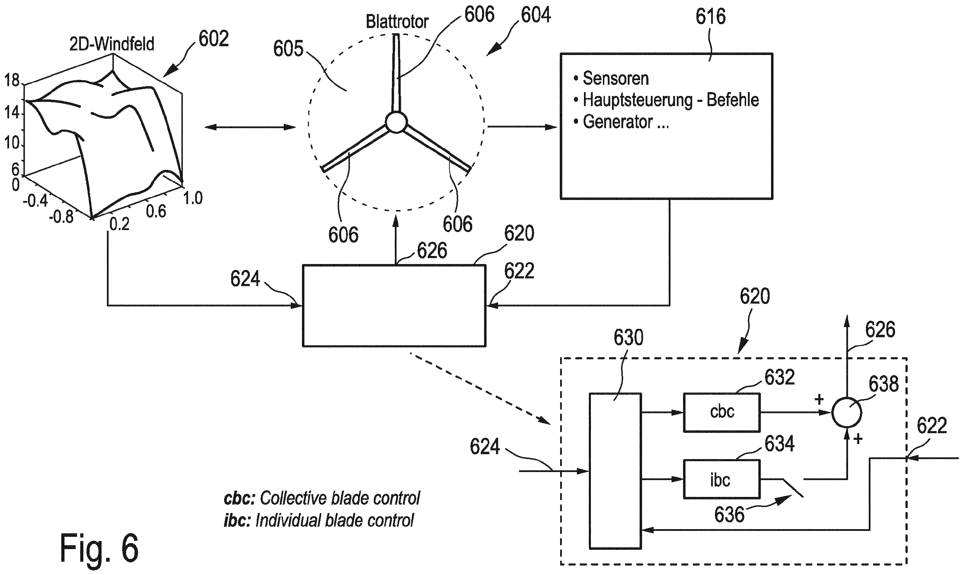

Weiterhin veranschaulicht die Figur 6 schematisch, dass eine Beziehung zwischen dem Rotor 604 mit seinen Rotorblättern 606 und dem veranschaulichten Windfeld 602 besteht. Im Übrigen ist auch als Kreis die Rotorfläche 605 eingezeichnet.

Es ist in dem Hauptblock 616 veranschaulicht, dass dieser von dem Rotor 606 beeinflusst wird bzw. daraus Steuerungshandlungen für die Windenergieanlage insgesamt abgeleitet werden können. Exemplarisch ist darauf hinzuweisen, dass dieser Hauptblock 616 Sensoren beinhalten kann, um Zustände des Rotors zu erfassen wie beispielsweise die Rotordrehzahl. Weiterhin wird davon abhängig eine Hauptsteuerung betrieben, die die Windenergieanlage steuern kann. Insbesondere kann sie auch von der Drehzahl des Rotors abhängen. Sie kann aber auch, um ein weiteres Beispiel zu nennen, Blattwinkel berücksichtigen. Auch abhängig von dem Rotor bzw. seinem Verhalten, wie beispielsweise abhängig von der erfassten Rotordrehzahl, kann auch der Generator gesteuert werden.

Eine resultierende Steuerungsmaßnahme ist, von diesem Hauptblock 616 aus ein Pitchsystem 620 anzusteuern. Hierzu sieht die exemplarisch gezeigte Pitchsteuerung 620 einen Haupteingang 622 vor. Außerdem wirkt das Windfeld 602 auf die Pitchsteuerung 620, was über den Lasteingang 624 veranschaulichte wird. Besonders diese Rückführung des Windfeldes 602 ist als Veranschaulichung zu verstehen für individuelle Lasten, die in dem Rotorfeld 605 nicht homogen sind.

Die Pitchsteuerung 620 weist dann einen Pitchausgang 626 auf, der auf die Rotorblätter 606 und damit auf den Rotor 604 einwirkt, nämlich individuelle Blattverstellungen vorsieht, zumindest dafür entsprechende Blattsollwinkel vorgibt. Diese Blattsollwinkel werden vorzugsweise als Winkeltrajektorien vorgegeben.

Die Pitchsteuerung 620 ist mit ihrem Haupteingang 622, ihrem Lasteingang 624 und ihrem Pitchausgang 626 auch noch vergrößert dargestellt.

Die Pitchsteuerung 620 in ihrer Vergrößerung zeigt einen Pitchsteuerblock 630, der sowohl Größen von der Hauptsteuerung, also dem Hauptblock 616 erhält, als auch Lastgrößen über den Lasteingang 624. Daraus wird zum einen in dem Grundwinkelblock 632 ein Grundwinkel bestimmt und in dem Individualwinkelblock 634 für jedes Rotorblatt ein individueller Aufschaltwinkel bestimmt. Diese beiden Winkel können in dem Summierglied 638 zu einem Blattsollwinkel addiert werden.

Die Pitchsteuerung 620 sieht mit dem Schalter 636 die Möglichkeit vor, dass der Aufschaltwinkel, der in dem Individualwinkelblock 634 bestimmt wird, nicht aufgeschaltet wird. In diesem Fall entspricht dann der von dem Grundwinkelblock 632 bestimmte Grundwinkel bereits dem Sollwinkel. In diesem Fall sind auch die Winkel aller drei Rotorblätter 606 gleich. Durch diesen Schalter 636 kann somit auf einfache Weise vorgesehen sein, eine Einzelblattverstellung zu deaktivieren, wenn sie erkennbar wenig Auswirkung haben dürfte. Besonders bei schwachen Windsituationen kann vorgesehen sein, diesen Schalter 636 zu öffnen, wie er in der Figur 6 dargestellt ist, um dadurch die Einzelblattverstellung zu deaktivieren.

Dabei ist zu beachten, dass bei einer Situation mit schwachem Wind dennoch die Optimierungsberechnungen Aufschaltwinkel oder Aufschaltwinkeltrajektorien berechnen. Diese dürften zwar als Ergebnis der Lösung eines Optimierungsproblems unter Berücksichtigung von Randbedingungen nur gering sein, dennoch würden sie zu einem unnötigen Ansteuern der Pitchantriebe führen. Dies kann durch den Schalter 636 verhindert werden. Dieser kann abhängig von Windgeschwindigkeiten oder auch abhängig von anderen Zuständen der Windenergieanlage wie beispielsweise der Rotordrehzahl geschaltet werden. Es kommt auch in Betracht, ein Ergebnis des Einzelblattalgorithmus, beispielsweise die Größe berechneter Aufschaltwinkel, als Kriterium für den Schalter 636 zu verwenden.

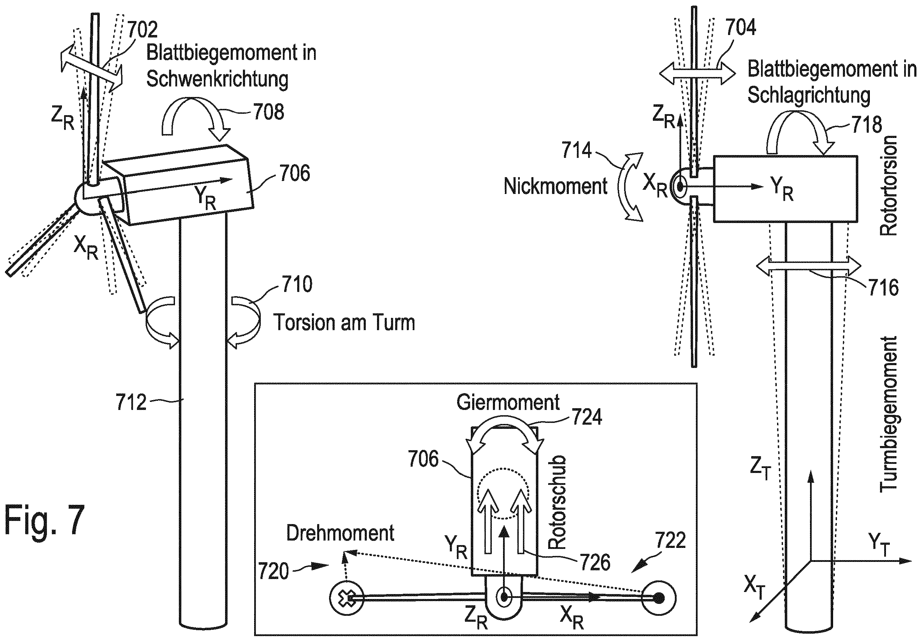

Figur 7 zeigt besonders verschiedene Belastungen, die besonders auch durch ein nichthomogenes Windfeld auftreten können. Zunächst können Blattbiegemomente in Schwenkrichtung entstehen, die mit dem Bezugszeichen 702 verdeutlicht werden bzw. mit einem Blattbiegemomentpfeil in Schwenkrichtung 702. Auch können Blattbiegemomente in Schlagrichtung 704 auftreten.

In der linken Darstellung ist veranschaulicht, dass besonders Blattbiegemomente in Schwenkrichtung 702 zu einer Schwenkbewegung 708 der Gondel 706 um ihre horizontale Achse führen können. Auch eine Torsionsbewegung 710 des Turms 712 kommt in Betracht.

Besonders die Biegemomente in Schlagrichtung 704 können, was im rechten Teil der Figur 7 veranschaulicht ist, zu einem Nickmoment 714 führen. Es kann hier auch ein Turmbiegemoment 716 auftreten, sowie eine Rotortorsion 718.

Im mittleren Diagramm der Figur 7 ist auch noch veranschaulicht, dass ein Drehmoment 720 auf den Rotor 722 wirken kann. Außerdem kann ein Giermoment 724 auftreten, das ein Drehmoment ist, das auf die Gondel 706 um ihre senkrechte Achse wirkt. Letztlich kann auch ein Rotorschub 726 auftreten, der eine axiale Belastung auf den Rotor darstellt.

Im Übrigen sind zur Veranschaulichung und Orientierung die drei kartesischen auf den Rotor möglicherweise wirkenden Kraftrichtungen X_{R}, Y_{R} und Z_{R} angegeben. Ebenfalls zur Orientierung sind die drei kartesischen Richtungen X_{T}, Y_{T} und Z_{T} angegeben.

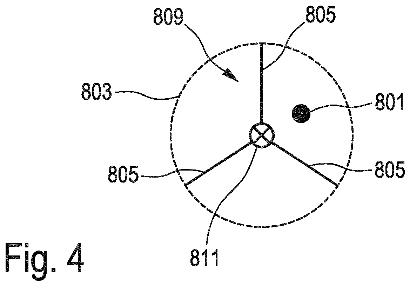

Figur 4 zeigt eine schematische Darstellung eines Lastmittelpunktes 801 in einer Rotorfläche 803. Die Rotorfläche 803 ist die Fläche, die durch die Rotorblätter 805 des Rotors 809 überstrichen wird. der Rotor 809 hat einen Drehmittelpunkt 811, der auch der geometrische Mittelpunkt des Rotors 809 ist. Der Lastmittelpunkt 801 weicht in Figur 8 von dem Drehmittelpunkt 811 ab. Es könnte zwar als optimal angesehen werden, wenn der Lastmittelpunkt 801 immer mit dem Drehmittelpunkt 811 übereinstimmt, es wurde aber erkannt, dass es oftmals besser ist, die Windenergieanlage so zu betreiben, dass der Lastmittelpunkt amplitudenmäßig möglichst konstant bleibt. Es wurde nämlich erkannt, dass dadurch Wechsellasten vermieden werden, die mitunter eine größere Belastung darstellen können, als eine absolute Belastung, die dadurch hervorgerufen wird, dass der Lastmittelpunkt 801 von dem Drehmittelpunkt 811 abweicht. Dabei wurde auch erkannt, dass durch eine entsprechende Einzelblattverstellung erreicht werden kann, den Lastmittelpunkt 801 im Wesentlichen in Bezug auf den Drehmittelpunkt konstant zu halten.

## Patentansprüche

1. Verfahren zum Steuern einer Windenergieanlage, wobei
- die Windenergieanlage einen aerodynamischen Rotor mit in ihrem Blattwinkel individuell verstellbaren Rotorblättern aufweist und der Rotor mit einer variablen Rotordrehzahl betreibbar ist, und
- die Windenergieanlage einen mit dem aerodynamischen Rotor gekoppelten Generator aufweist, zum Erzeugen einer Generatorleistung, umfassend die Schritte:
- individuelles Verstellen jedes Blattwinkels entsprechend eines individuellen Blattsollwinkels, wobei
- sich jeder Blattsollwinkel zusammensetzt aus
- einem für alle Rotorblätter vorgegebenen gemeinsamen Grundwinkel und
- einem individuellen Aufschaltwinkel zum Berücksichtigen individueller Lastmomente,
- Erfassen jeweils wenigstens eines Lastmomentes an jedem der Rotorblätter oder einer dazu repräsentativen Größe, wobei
- zu jedem betrachteten Rotorblatt ein vorlaufendes Rotorblatt vorhanden ist und der Blattsollwinkel jedes betrachteten Rotorblattes in Abhängigkeit des wenigstens einen Lastmomentes seines vorlaufenden Rotorblattes gemäß wenigstens eines oder mehrerer erster und/oder zweiter Auslegungskriterien bestimmt wird, **dadurch gekennzeichnet, dass**
- wenigstens eines, bzw. das eine oder die mehreren ersten Auslegungskriterien ausgewählt sind aus der Liste umfassend
- Lastreduktion,
- Ertragsneutralität und
- Antriebsschonung eines Pitchantriebs und außerdem oder alternativ
- das eine oder die mehreren zweiten Auslegungskriterien ausgewählt sind aus der Liste umfassend
- Antriebsdynamik des Pitchantriebs und
- Grenzwerte des Pitchantriebs, wobei
- das wenigstens eine erfasste Lastmoment und ggf. die weiteren Größen über einstellbare Gewichtungsfaktoren oder Gewichtungsfunktionen einfließen, insbesondere so, dass jeder der weiteren Größen jeweils einem der einstellbaren Gewichtungsfaktoren bzw. einer der einstellbaren Gewichtungsfunktionen zugeordnet ist und wobei
- die Gewichtungsfaktoren bzw. Gewichtungsfunktionen in Abhängigkeit der erzielbaren Lastreduktion, Ertragsneutralität und Antriebsschonung gewählt werden.

2. Verfahren nach Anspruch 1, **dadurch gekennzeichnet, dass** zum Bestimmen jedes Aufschaltwinkels eine Winkeltrajektorie bestimmt wird und der Aufschaltwinkel jeweils ein Element der Winkeltrajektorie ist, so dass die Winkeltrajektorie jeweils einen kontinuierlichen, besonders einen stetigen, insbesondere stetig differenzierbaren Verlauf des jeweiligen Aufschaltwinkels angibt.

3. Verfahren nach Anspruch 2, **dadurch gekennzeichnet, dass** die Winkeltrajektorie in wenigstens zwei Schritten bestimmt wird, wobei
- in einem ersten Schritt eine optimale Winkeltrajektorie bestimmt wird, die in Bezug auf wenigstens eines oder mehrerer erster Auslegungskriterien optimiert ist, und
- in einem zweiten Schritt die im ersten Schritt bestimmte optimale Winkeltrajektorie unter weiterer Berücksichtigung eines oder mehrerer zweiter Auslegungskriterien zu einer angepassten Winkeltrajektorie geändert wird.

4. Verfahren nach Anspruch 2 oder 3, **dadurch gekennzeichnet, dass** die Winkeltrajektorie, insbesondere eine bzw. die optimale Winkeltrajektorie über die Lösung eines Optimierungsproblems basierend wenigstens auf dem wenigstens eines oder mehreren ersten Auslegungskriterien bestimmt wird.

5. Verfahren nach einem der vorstehenden Ansprüche, **dadurch gekennzeichnet, dass** jeder Blattsollwinkel in Abhängigkeit wenigstens einer weiteren Größe bestimmt wird, die ausgewählt ist aus der Liste, bestehend aus den Größen
- aktueller Blattwinkel des betrachteten Rotorblattes,
- Blattbiegemomente
- Betriebszustand verwendeter Pitchsysteme und
- Sektorgröße eines für das erfasste Blatt-Lastmoment betrachteten Sektors und
- Lastmoment einer Rotornabe und
- Rotornabenbiegemoment und
- Rotordrehzahl und
- Rotorposition und
- Rotorbeschleunigung.

6. Verfahren nach einem der vorstehenden Ansprüche, **dadurch gekennzeichnet, dass** der Aufschaltwinkel so gewählt wird,
- dass der Mittelwert der Aufschaltwinkel aller Rotorblätter null ist und/oder
- dass der Betrag jedes Aufschaltwinkels einen vorbestimmbaren Maximalwinkel nicht überschreitet.

7. Verfahren nach einem der vorstehenden Ansprüche, **dadurch gekennzeichnet, dass** an jedem Rotorblatt wenigstens zwei Belastungsmessungen mit unterschiedlichen Belastungsrichtungen erfasst werden und die Blattsollwinkel so bestimmt werden, dass eine auf die Windenergieanlage wirkende Belastung so minimiert wird, dass ein Nickmoment und/oder ein Giermoment minimiert werden, zumindest verringert werden.

8. Verfahren nach einem der vorstehenden Ansprüche, **dadurch gekennzeichnet, dass** eine von den Rotorblättern überstrichene Rotorfläche zur Erfassung der Lastmomente in mehrere Sektoren unterteilt wird und die Lastmomente jeweils beim Überstreichen eines Sektors durch ein Rotorblatt aufgenommen werden und daraus eine Teiltrajektorie für Blattsollwerte eines nachlaufenden Rotorblattes bestimmt wird, insbesondere so, dass die Teiltrajektorie aus mehreren Stützstellen zusammengesetzt wird und insbesondere zwischen den Stützstellen Werte der Teiltrajektorie interpoliert werden.

9. Verfahren nach Anspruch 8, **dadurch gekennzeichnet, dass** die Aufteilung der Rotorfläche in Sektoren in Abhängigkeit eines erfassten oder zu erwartenden Windfeldes im Bereich der Rotorfläche erfolgt, besonders so, dass eine Größe und/oder Anzahl der Sektoren abhängig des Windfeldes ausgewählt wird, und/oder dass die Anzahl der Stützstellen der Teiltrajektorie von dem Windfeld abhängen.

10. Verfahren nach einem der Ansprüche 8 oder 9, **dadurch gekennzeichnet, dass** die Aufteilung der Rotorfläche in Sektoren, insbesondere Größe und/oder Anzahl der Sektoren, adaptiv im laufenden Betrieb der Windenergieanlage vorgenommen wird.

11. Verfahren nach einem der vorstehenden Ansprüche, **dadurch gekennzeichnet, dass** mehrere virtuelle Rotorflächen definiert werden, wobei jede virtuelle Rotorfläche der tatsächlichen Rotorfläche entspricht und zusätzlich durch wenigstens einen Zeitwert und/oder eine zugehörige Rotorumdrehung gekennzeichnet ist.

12. Verfahren nach einem der vorstehenden Ansprüche, **dadurch gekennzeichnet, dass** eine Belastungserfassung über mehrere Umdrehungen erfolgt und der Sollwinkel zusätzlich in Abhängigkeit der Belastung wenigstens einer vorherigen Umdrehung bestimmt wird.

13. Verfahren nach einem der vorstehenden Ansprüche, **dadurch gekennzeichnet, dass** jedes betrachtete Rotorblatt seinem Blattsollwert mit einer vorgebbaren Einstelldynamik nachgeführt wird, wobei die Einstelldynamik insbesondere ein PTn-Verhalten, mit n >=1 und/oder ein anderes asymptotisch gedämpftes Verhalten aufweist.

14. Verfahren nach einem der vorstehenden Ansprüche, **dadurch gekennzeichnet, dass** das Verstellen des Blattwinkels jedes betrachteten Rotorblattes, insbesondere einschließlich der Vorgabe des Blattsollwinkels, ohne Rückführung einer Belastung des betrachteten Rotorblattes erfolgt.

15. Verfahren nach einem der vorstehenden Ansprüche, **dadurch gekennzeichnet, dass** die Blattwinkelsollwerte so vorgegeben werden, dass sich das Nickmoment und das Giermoment gegenüber einem Sollwinkel ohne Aufschaltwinkel reduzieren, wobei eine Erhöhung einer Belastung der Rotorblätter zugelassen wird.

16. Verfahren nach einem der vorstehenden Ansprüche, **dadurch gekennzeichnet, dass**
- der Rotor in seiner von den Rotorblättern überstrichenen Rotorfläche einen Drehmittelpunkt (811) aufweist, der einen geometrischen Mittelpunkt der Rotorfläche bildet und um den sich der Rotor dreht,
- der Rotor in seiner Rotorfläche einen Lastmittelpunkt (801) aufweist, der einen Mittelpunkt aller auf den Rotor wirkenden Lasten bildet und
- das Verfahren so arbeitet, dass auch dann, wenn der Lastmittelpunkt von dem Drehmittelpunkt abweicht die Blattsollwinkel, insbesondere die Aufschaltwinkel, so bestimmt werden, dass der Lastmittelpunkt im Wesentlichen konstant bleibt, insbesondere in Bezug auf seine Schwingungsamplitude konstant bleibt, und nicht zu dem Drehmittelpunkt hingeführt wird.

17. Windenergieanlage, umfassend
- einen aerodynamischen Rotor mit in ihrem Blattwinkel individuell verstellbaren Rotorblättern und wobei der Rotor mit einer variablen Rotordrehzahl betreibbar ist,
- einen mit dem aerodynamischen Rotor gekoppelten Generator, zum Erzeugen einer Generatorleistung,
- eine Blattsteuervorrichtung zum individuellen Verstellen jedes Blattwinkels entsprechend eines individuellen Blattsollwinkels, wobei
- sich jeder Blattsollwinkel zusammensetzt aus
- einem für alle Rotorblätter vorgegebenen gemeinsamen Grundwinkel und
- einem individuellen Aufschaltwinkel zum Berücksichtigen individueller Lastmomente,
- eine Lasterfassungseinheit zum Erfassen jeweils wenigstens eines Lastmomentes an jedem der Rotorblätter, wobei
- zu jedem betrachteten Rotorblatt ein vorlaufendes Rotorblatt vorhanden ist und der Blattsollwinkel jedes betrachteten Rotorblattes in Abhängigkeit des wenigstens einen Lastmomentes seines vorlaufenden Rotorblattes bestimmt wird, wobei
- die Windenergieanlage dazu eingerichtet ist, ein Verfahren nach einem der Ansprüche 1 bis 16 auszuführen.

18. Windenergieanlage nach Anspruch 17, **dadurch gekennzeichnet, dass** die Lasterfassungseinheit wenigstens einen Blattsensor an jedem der Rotorblätter aufweist, insbesondere wenigstens zwei Blattsensoren an jedem Rotorblatt so aufweist, dass an jedem Rotorblatt Belastungen in wenigstens zwei Richtungen erfasst werden können.

## Claims

1. A method for controlling a wind power installation, wherein
- the wind power installation has an aerodynamic rotor with rotor blades that are individually adjustable in their blade angle and the rotor can be operated with a variable rotational rotor speed, and
- the wind power installation has a generator coupled to the aerodynamic rotor, for generating a generator output, comprising the steps of:
- individually adjusting each blade angle in a way corresponding to an individual setpoint blade angle, wherein
- each setpoint blade angle is made up of
- a common basic angle, which is specified for all of the rotor blades, and
- an individual compensatory angle, to allow for individual load torques,
- detecting in each case at least one load torque on each of the rotor blades, or a variable that is representative of this, wherein
- for each rotor blade considered, there is a preceding rotor blade and the setpoint blade angle of each rotor blade considered is determined in dependence on the at least one load torque of its preceding rotor blade according to at least one or more first and/or second design criteria,
**characterized in that**
- at least one, or the one or more first design criteria are selected from the list comprising
- reduction of the load,
- neutrality of the yield and
- preservation of a pitch drive and also or alternatively
- the one or more second design criteria are selected from the list comprising
- drive dynamics of the pitch drive and
- limit values of the pitch drive, wherein
- the at least one detected load torque and possibly the further variables are included by way of weighting factors or weighting functions that can be set, in particular such that each of the further variables is respectively assigned one of the weighting factors or weighting functions that can be set and wherein
- the weighting factors or weighting functions are chosen in dependence on the achievable reduction of the load, neutrality of the yield and preservation of the drive.

2. The method as claimed in claim 1, **characterized in that** an angle trajectory is determined for determining each compensatory angle and the compensatory angle is in each case an element of the angle trajectory, so that the angle trajectory respectively indicates a continuous, particularly a steady, in particular continuously differentiable, progression of the respective compensatory angle.

3. The method as claimed in claim 2, **characterized in that** the angle trajectory is determined in at least two steps, wherein
- in a first step, an optimum angle trajectory that is optimized with respect to at least one or more first design criteria is determined, and
- in a second step, the optimum angle trajectory determined in the first step is altered to an adapted angle trajectory, while making further allowance for one or more second design criteria.

4. The method as claimed in claim 2 or 3, **characterized in that** the angle trajectory, in particular a or the optimum angle trajectory, is determined by way of the solution to an optimization problem on the basis of at least on the at least one or more first design criteria.

5. The method as claimed in one of the preceding claims, **characterized in that** each setpoint blade angle is chosen in dependence on at least one further variable, which is chosen from the list consisting of the variables
- blade angle at the specific time of the rotor blade considered,
- blade bending torques
- operating state of pitch systems used and
- sector size of a sector considered for the detected blade load torque and
- load torque of a rotor hub and
- rotor hub bending torque and
- rotational rotor speed and
- rotor position and
- rotor acceleration.

6. The method as claimed in one of the preceding claims, **characterized in that** the compensatory angle is chosen such that
- the mean value of the compensatory angles of all of the rotor blades is zero and/or
- the absolute value of each compensatory angle does not exceed a predeterminable maximum angle.

7. The method as claimed in one of the preceding claims, **characterized in that** at least two loading measurements with different loading directions are detected on each rotor blade and the setpoint blade angles are determined such that a loading acting on the wind power installation is minimized such that a pitching moment and/or a yawing moment are minimized, at least are reduced.

8. The method as claimed in one of the preceding claims, **characterized in that**, for detecting the load torques, a rotor area passed over by the rotor blades is divided into multiple sectors and the load torques are respectively recorded when a sector is passed over by a rotor blade and this is used for determining a partial trajectory for setpoint blade values of a following rotor blade, in particular such that the partial trajectory is made up of multiple interpolation points and, in particular, between the interpolation points, values of the partial trajectory are interpolated.

9. The method as claimed in claim 8, **characterized in that** the division of the rotor area into sectors takes place in dependence on a detected or likely wind field in the region of the rotor area, particularly such that a size and/or number of the sectors is chosen in a manner dependent on the wind field, and/or **in that** the number of interpolation points of the partial trajectory depends on the wind field.

10. The method as claimed in either of claims 8 and 9, **characterized in that** the division of the rotor area into sectors, in particular the size and/or number of the sectors, is performed adaptively in the course of operation of the wind power installation.

11. The method as claimed in one of the preceding claims, **characterized in that** multiple virtual rotor areas are defined, wherein each virtual rotor area corresponds to the actual rotor area and is additionally **characterized by** at least one time value and/or an associated rotor revolution.

12. The method as claimed in one of the preceding claims, **characterized in that** a loading detection takes place over multiple revolutions and the setpoint angle is additionally determined in dependence on the loading of at least one previous revolution.

13. The method as claimed in one of the preceding claims, **characterized in that** each rotor blade considered is readjusted to its setpoint blade value with specifiable setting dynamics, the setting dynamics having in particular PTn behavior with n>=1, and/or having a different asymptotically damped behavior.

14. The method as claimed in one of the preceding claims, **characterized in that** the adjustment of the blade angle of each rotor blade considered, in particular including the specification of the setpoint blade angle, takes place without feedback of a loading of the rotor blade considered.

15. The method as claimed in one of the preceding claims, **characterized in that** the setpoint blade angle values are specified such that the pitching moment and the yawing moment are reduced in comparison with a setpoint angle without a compensatory angle, permitting an increase in a loading of the rotor blades.

16. The method as claimed in one of the preceding claims, **characterized in that**
- the rotor has in its rotor area that is passed over by the rotor blades a center point of rotation (811), which forms a geometrical center point of the rotor area and about which the rotor rotates,
- the rotor has in its rotor area a load center point (801), which forms a center point of all of the loads acting on the rotor, and
- the method proceeds such that, even when the load center point deviates from the center point of rotation, the setpoint blade angles, in particular the compensatory angles, are determined such that the load center point substantially remains constant, in particular remains constant with respect to its oscillating amplitude and is not brought to the center point of rotation.

17. A wind power installation, comprising
- an aerodynamic rotor with rotor blades that are individually adjustable in their blade angle and wherein the rotor can be operated with a variable rotational rotor speed, and
- a generator coupled to the aerodynamic rotor, for generating a generator output,
- a blade control device for individually adjusting each blade angle in a way corresponding to an individual setpoint blade angle, wherein
- each setpoint blade angle is made up of
- a common basic angle, which is specified for all of the rotor blades, and
- an individual compensatory angle, to allow for individual load torques,
- a load detecting unit for detecting in each case at least one load torque on each of the rotor blades, wherein
- for each rotor blade considered, there is a preceding rotor blade and the setpoint blade angle of each rotor blade considered is determined in dependence on the at least one load torque of its preceding rotor blade, wherein
- the wind power installation is set up to for performing a method as claimed in one of claims 1 to 16.

18. The wind power installation as claimed in claim 17, **characterized in that** the load detection unit has at least one blade sensor on each of the rotor blades, in particular has at least two blade sensors on each rotor blade such that loadings in at least two directions can be detected on each rotor blade.

## Revendications

1. Procédé de commande d'une éolienne, dans lequel
- l'éolienne présente un rotor aérodynamique avec des pales de rotor réglables individuellement dans leur angle de pale et le rotor peut être actionné avec une vitesse de rotation de rotor variable, et
- l'éolienne présente un générateur couplé au rotor aérodynamique pour la génération d'une puissance de générateur, comprenant les étapes suivantes :
- le réglage individuel de chaque angle de pale selon un angle de consigne de pale individuel, dans lequel
- chaque angle de consigne de pale se compose de
- un angle de base commun prédéfini pour toutes les pales de rotor et
- un angle de compensation individuel pour la prise en compte de couples de charge individuels,
- la détection respectivement au moins d'un couple de charge au niveau de chacune des pales de rotor ou d'une grandeur représentative de celui-ci, dans lequel
- pour chaque pale de rotor considérée, une pale de rotor antérieure est présente et l'angle de consigne de pale de chaque pale de rotor considérée est déterminé en fonction d'au moins un couple de charge de sa pale de rotor antérieure selon au moins un ou plusieurs premiers et/ou seconds critères de conception,
**caractérisé en ce que**
- au moins un ou l'un ou les plusieurs premiers critères de conception sont sélectionnés à partir de la liste comprenant
- la réduction de charge,
- la neutralité de rendement et
- la préservation d'entraînement d'un entraînement de calage et en outre ou en variante
- l'un ou les plusieurs seconds critères de conception sont sélectionnés à partir de la liste comprenant
- la dynamique d'entraînement de l'entraînement de calage et
- les valeurs limites de l'entraînement de calage, dans lequel
- l'au moins un couple de charge détecté et éventuellement les autres grandeurs s'intègrent par le biais de facteurs de pondération ou fonctions de pondération réglables, en particulier de sorte que chacune des autres grandeurs soit associée respectivement à un des facteurs de pondération réglables ou une des fonctions de pondération réglables et dans lequel
- les facteurs de pondération ou fonctions de pondération sont choisis en fonction de la réduction de charge, la neutralité de rendement et la préservation d'entraînement réalisables.

2. Procédé selon la revendication 1, **caractérisé en ce qu'**une trajectoire d'angle est déterminée pour la détermination de chaque angle de compensation et l'angle de compensation est respectivement un élément de la trajectoire d'angle de sorte que la trajectoire d'angle indique respectivement une courbe continue, particulièrement une courbe constante, en particulier différenciable constamment de l'angle de compensation respectif.

3. Procédé selon la revendication 2, **caractérisé en ce que** la trajectoire d'angle est déterminée dans au moins deux étapes, dans lequel
- dans une première étape, une trajectoire d'angle optimale est déterminée, laquelle est optimisée en ce qui concerne au moins un ou plusieurs premiers critères de conception, et
- dans une seconde étape, la trajectoire d'angle optimale déterminée dans la première étape est modifiée en tenant encore compte d'un ou plusieurs seconds critères de conception pour une trajectoire d'angle adaptée.

4. Procédé selon la revendication 2 ou 3, **caractérisé en ce que** la trajectoire d'angle, en particulier une ou la trajectoire d'angle optimale est déterminée par le biais de la solution d'un problème d'optimisation sur la base au moins de l'au moins un ou plusieurs premiers critères de conception.

5. Procédé selon l'une quelconque des revendications précédentes, **caractérisé en ce que** chaque angle de consigne de pale est déterminé en fonction d'au moins une autre grandeur qui est sélectionnée à partir de la liste se composant des grandeurs
- angle de pale actuel de la pale du rotor considérée,
- couples de flexion de pale,
- état de fonctionnement de systèmes de calage utilisés et
- grandeur de secteur d'un secteur considéré pour le couple de charge de pale détecté et
- couple de charge d'un moyeu du rotor et
- couple de flexion de moyeu du rotor et
- vitesse de rotation du rotor et
- position du rotor et
- accélération du rotor.

6. Procédé selon l'une quelconque des revendications précédentes, **caractérisé en ce que** l'angle de compensation est choisi de sorte
- que la valeur médiane de l'angle de compensation de toutes les pales de rotor s'élève à zéro et/ou
- que la somme de chaque angle de compensation ne dépasse pas un angle maximal pouvant être prédéterminé.

7. Procédé selon l'une quelconque des revendications précédentes, **caractérisé en ce qu'**au niveau de chaque pale de rotor, au moins deux mesures de sollicitation sont détectées avec différents sens de sollicitation et les angles de consigne de pale sont déterminés de sorte qu'une sollicitation agissant sur l'éolienne soit minimisée de sorte qu'un couple de basculement et/ou un couple de lacet soient minimisés, au moins soient réduits.

8. Procédé selon l'une quelconque des revendications précédentes, **caractérisé en ce qu'**une surface de rotor balayée par les pales de rotor est divisée pour la détection des couples de charge en plusieurs secteurs et les couples de charge sont reçus respectivement lors du balayage d'un secteur par une pale de rotor et à partir de ceux-ci, une trajectoire partielle pour des valeurs de consigne de pale d'une pale de rotor postérieure est déterminée, en particulier de sorte que la trajectoire partielle soit composée de plusieurs points d'appui et des valeurs de la trajectoire partielle soient interpolées en particulier entre les points d'appui.

9. Procédé selon la revendication 8, **caractérisé en ce que** la répartition de la surface de rotor en secteurs est effectuée en fonction d'un champ de vent détecté ou à attendre dans la zone de la surface de rotor, particulièrement de sorte qu'une grandeur et/ou un nombre de secteurs soit sélectionné en fonction du champ de vent, et/ou que le nombre des points d'appui de la trajectoire partielle dépende du champ de vent.

10. Procédé selon l'une quelconque des revendications 8 ou 9, **caractérisé en ce que** la répartition de la surface de rotor en secteurs, en particulier grandeur et/ou nombre de secteurs est entreprise de manière adaptative pendant le fonctionnement de l'éolienne.

11. Procédé selon l'une quelconque des revendications précédentes, **caractérisé en ce que** plusieurs surfaces de rotor virtuelles sont définies, dans lequel chaque surface de rotor virtuelle correspond à la surface de rotor réelle et est en outre **caractérisée par** au moins une valeur temporelle et/ou une rotation de rotor afférente.

12. Procédé selon l'une quelconque des revendications précédentes, **caractérisé en ce qu'**une détection de sollicitation est effectuée sur plusieurs rotations et l'angle de consigne est en outre déterminé en fonction de la sollicitation d'au moins une rotation précédente.

13. Procédé selon l'une quelconque des revendications précédentes, **caractérisé en ce que** chaque pale de rotor considérée est ajustée à sa valeur de consigne de pale avec une dynamique de réglage pouvant être prédéfinie, dans lequel la dynamique de réglage présente en particulier un comportement PTn, avec n >= 1 et/ou un autre comportement amorti de manière asymptomatique.

14. Procédé selon l'une quelconque des revendications précédentes, **caractérisé en ce que** le réglage de l'angle de pale de chaque pale de rotor considérée, en particulier y compris la prescription de l'angle de consigne de pale, est effectué sans retour d'une sollicitation de la pale de rotor considérée.

15. Procédé selon l'une quelconque des revendications précédentes, **caractérisé en ce que** les valeurs de consigne d'angle de pale sont prédéfinies de sorte que le couple de basculement et le couple de lacet se réduisent par rapport à un angle de consigne sans angle de compensation, dans lequel une augmentation d'une sollicitation des pales de rotor est autorisée.

16. Procédé selon l'une quelconque des revendications précédentes, **caractérisé en ce que**
- le rotor dans sa surface de rotor balayée par les pales de rotor présente un point médian rotatif (811) qui forme un point médian géométrique et autour duquel le rotor tourne,
- le rotor présente dans sa surface de rotor un point médian de charge (801) qui forme un point médian de toutes les charges agissant sur le rotor et
- le procédé travaille de sorte qu'aussi lorsque le point médian de charge diverge du point médian rotatif, les angles de consigne de pale, en particulier les angles de compensation soient déterminés de sorte que le point médian de charge reste sensiblement constant, en particulier reste constant en ce qui concerne son amplitude d'oscillation, et ne soit pas guidé vers le point médian rotatif.

17. Eolienne comprenant
- un rotor aérodynamique avec des pales de rotor réglables individuellement dans leur angle de pale et dans laquelle le rotor peut être actionné avec une vitesse de rotation de rotor variable,
- un générateur couplé au rotor aérodynamique pour la génération d'une puissance de générateur,
- un dispositif de commande de pale pour le réglage individuel de chaque angle de pale selon un angle de consigne de pale individuel, dans laquelle
- chaque angle de consigne de pale se compose de
- un angle de base commun prédéfini pour toutes les pales de rotor et
- un angle de compensation individuel pour la prise en considération de couples de charge individuels,
- une unité de détection de charge pour la détection respectivement au moins d'un couple de charge au niveau de chacune des pales de rotor, dans laquelle
- pour chaque pale de rotor considérée, une pale de rotor antérieure est présente et l'angle de consigne de pale de chaque pale de rotor considérée est déterminé en fonction d'au moins un couple de charge de sa pale de rotor antérieure, dans laquelle
- l'éolienne est conçue afin de réaliser un procédé selon l'une quelconque des revendications 1 à 16.

18. Eolienne selon la revendication 17, **caractérisée en ce que** l'unité de détection de charge présente au moins un capteur de pale au niveau de chacune des pales de rotor, en particulier présente au moins deux capteurs de pale au niveau de chaque pale de rotor de sorte qu'au niveau de chaque pale de rotor, des sollicitations puissent être détectées dans au moins deux sens.
